# EUROPEAN PATENT SPECIFICATION

(11) **EP 3 609 102 B1**
(45) Date of publication and mention of the grant of the patent: **26.01.2022**
(21) Application number: 17908217.7
(22) Date of filing: 04.05.2017
(51) Int. Cl.: H04L 1/16, H04W 72/04, H04L 1/18, H04L 5/00

(54) **INFORMATION TRANSMISSION CONTROL METHOD, TERMINAL DEVICE AND NETWORK DEVICE**
INFORMATIONSÜBERTRAGUNGSSTEUERUNGSVERFAHREN, ENDGERÄTEVORRICHTUNG UND NETZWERKVORRICHTUNG
PROCÉDÉ DE COMMANDE DE TRANSMISSION D'INFORMATIONS, DISPOSITIF TERMINAL ET DISPOSITIF RÉSEAU

(43) Date of publication of application: 12.02.2020
(73) Proprietor: Huawei Technologies Co., Ltd., Longgang District Shenzhen, Guangdong 518129 (CN)
(72) Inventor: LI, Chaojun, Shenzhen Guangdong 518129 (CN); CHENG, Yan, Shenzhen Guangdong 518129 (CN); SHAO, Jiafeng, Shenzhen Guangdong 518129 (CN); MA, Sha, Shenzhen Guangdong 518129 (CN)
(74) Representative: Epping - Hermann - Fischer
(86) International application number: PCT/CN2017/082988
(87) International publication number: WO 2018/201369

(56) References cited:
- WO-A1-2017/023146
- CN-A- 102 377 537
- CN-A- 103 026 677
- US-A1- 2012 294 273
- US-A1- 2013 044 667
- US-A1- 2014 036 856
- LG ELECTRONICS: "UCI Multiplexing on PUCCH", 3GPP DRAFT; R1-106101_LG_UCIMULTIPLEXING_PUCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 10 November 2010 (2010-11-10), XP050489776, [retrieved on 2010-11-10]
- NOKIA NETWORKS: "Dynamic adaptation of HARQ-ACK feedback size and PUCCH format", 3GPP TSG-RAN WG1 Meeting #81, Rl-152810, 29 May 2015 (2015-05-29), XP050969963,

## Description

### TECHNICAL FIELD

Embodiments of this application relate to the communications field, and more specifically, to a control information transmission method, a terminal device, and a network device.

### BACKGROUND

In a wireless communications system, latency (latency) is one of important factors that affect user experience. Continuously emerging new services, such as services related to the Internet of Vehicles, also impose an increasingly high requirement on latency. Therefore, in an existing Long Term Evolution (long term evolution, LTE) system, a transmission mechanism based on a transmission time interval (transmission time interval, TTI) of one subframe cannot satisfy a requirement of a low-latency service. To reduce latency, TTI lengths of a physical downlink shared channel (physical downlink shared channel, PDSCH), a physical uplink shared channel (physical uplink shared channel, PUSCH), and a physical channel (physical uplink control channel, PUCCH) need to be reduced from a subframe level to a timeslot level or even a symbol level.

The PUCCH is used to carry uplink control information (uplink control information, UCI). The UCI includes at least one of channel state information (channel state information, CSI), hybrid automatic repeat request - acknowledgement (hybrid automatic repeat request - acknowledgement, HARQ-ACK) information, and a scheduling request (scheduling request, SR). A PUCCH format (format) includes a plurality of types: PUCCH formats 1, 1a, 1b, 3, 4, and 5. The PUCCH format 1a is used to transmit 1-bit HARQ-ACK information, uses binary phase shift keying (Binary Phase Shift Keying, BPSK) for modulation, and is corresponding to a single-cell and single-codeword (codeword) scenario. The PUCCH format 1b is used to transmit 2-bit HARQ-ACK information, uses quadrature phase shift keying (Quadrature Phase Shift Keying, QPSK) for modulation, and is corresponding to a single-cell and two-codeword scenario. The PUCCH format 1 is used to transmit an SR. A terminal device needs to send an SR only when requesting an uplink resource; and sends no SR in another case, so as to save power and reduce interference. Therefore, SR transmission is different from HARQ-ACK information transmission. No explicit bit is used to send an SR; instead, whether there is an SR is indicated by whether there is energy on a corresponding PUCCH. When an SR and 1-bit or 2-bit HARQ-ACK information need to be transmitted simultaneously, the terminal device sends the PUCCH format 1a or the PUCCH format 1b on a PUCCH resource configured for the SR. In this way, on the PUCCH resource configured for the SR, a network device may determine, through energy detection, whether the terminal device initiates an uplink resource scheduling request. In addition, the network device may obtain the 1-bit or 2-bit HARQ-ACK information by demodulating the PUCCH format 1a or the PUCCH format 1b.

When a quantity of PUCCH symbols is reduced to 1, 2, or 3 symbols, to enhance performance of receiving HARQ-ACK information, a sequence-based PUCCH transmission mechanism is introduced: Different cyclic shifts are corresponding to different HARQ-ACK information. In a single-cell and single-codeword scenario, two cyclic shifts are required to represent two states of the codeword: ACK and NACK. In a single-cell and two-codeword scenario, four cyclic shifts are required to represent four states of the two codewords: (ACK, ACK), (NACK, NACK), (ACK, NACK), and (NACK, ACK).

After the quantity of PUCCH symbols is reduced to 1, 2, or 3 symbols, how to transmit an SR and how to simultaneously transmit an SR and HARQ-ACK information need to be further studied.

In the paper "UCI Multiplexing on PUCCH" from the 3GPP TSG RAN WG1 #63 Meeting (R1-106101), UCI combination for PUCCH format 3 and channel selection is discussed. According to said paper, a bundled ACK counter is transmitted on SR recource(s) when the SR is positive in a given SR subframe. In case SR is negative, (multi-bit) A/N is transmitted by channel selection using given PUCCH resources.

US 2014/0036856 A1 discloses a method and an apparatus for transmitting a Hybrid Automatic Repeat Request (HARQ) Acknowledgement (ACK)/Negative Acknowledgment (NACK) signal and a scheduling request (SR) over an identical uplink subframe by a user equipment in a time division duplex (TDD) system in a carrier aggregation environment. An example of a method for transmitting a HARQ ACK/NACK signal and an SR includes: receiving an allocation of a plurality of SR Physical Uplink Control Channel (PUCCH) resources; and transmitting a HARQ ACK/NACK signal using the plurality of SR PUCCH resources.

### SUMMARY

Embodiments of this application provide control information transmission methods, an apparatus and a computer program, according to the attached claims 1, 6, 11 and 12, respectively, to effectively resolve a problem about how to transmit an SR and how to simultaneously transmit an SR and HARQ-ACK information after a quantity of PUCCH symbols is reduced to 1, 2, or 3 symbols.

### BRIEF DESCRIPTION OF DRAWINGS

FIG. 1 is a schematic diagram of an application scenario of a technical solution according to an embodiment of this application;
FIG. 2 is a schematic flowchart of a control information transmission method according to an embodiment of this application;
FIG. 3 is a schematic block diagram of a terminal device according to an embodiment of this application;
FIG. 4 is a schematic block diagram of a network device according to an embodiment of this application;
FIG. 5 is another schematic block diagram of a terminal device according to an embodiment of this application;
FIG. 6 is another schematic block diagram of a network device according to an embodiment of this application;
FIG. 7 is still another schematic block diagram of a terminal device according to an embodiment of this application;
FIG. 8 is still another schematic block diagram of a network device according to an embodiment of this application;
FIG. 9 is still another schematic block diagram of a terminal device according to an embodiment of this application; and
FIG. 10 is still another schematic block diagram of a network device according to an embodiment of this application.

### DESCRIPTION OF EMBODIMENTS

The following describes the technical solutions in the embodiments of this application with reference to the accompanying drawings.

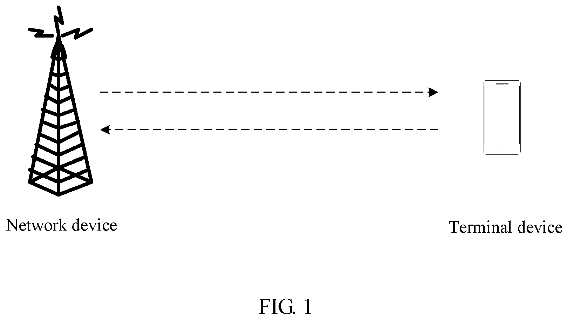

FIG. 1 is a schematic diagram of an application scenario of a technical solution according to an embodiment of this application. As shown in FIG. 1, this embodiment of this application is applicable to a scenario in which data transmission is performed between a terminal device and a network device. The scenario may be a wireless communications system, such as 4.5G and 5G communications. However, this application is not limited thereto.

It should be understood that the technical solutions in the embodiments of this application may be applied to various communications systems, for example, communications systems such as a Global System for Mobile Communications (Global System for Mobile Communications, GSM) system, a Code Division Multiple Access (Code Division Multiple Access, CDMA) system, a Wideband Code Division Multiple Access (Wideband Code Division Multiple Access, WCDMA) system, a Long Term Evolution (Long Term Evolution, LTE) system, an LTE frequency division duplex (Frequency Division Duplex, FDD) system, an LTE time division duplex (Time Division Duplex, TDD) system, Universal Mobile Telecommunications System (Universal Mobile Telecommunications System, UMTS), a future 5th Generation (5th-Generation, 5G) communications system, and CRAN.

It should be further understood that a network device in the embodiments of this application may be a device configured to communicate with a terminal device. For example, the network device may be a combination of a base transceiver station (Base Transceiver Station, BTS) and a base station controller (Base Station Controller, BSC) in a GSM system or a CDMA system, or may be a combination of a NodeB (NodeB, NB) and a radio network controller (Radio Network Controller, RNC) in a WCDMA system, or may be an evolved NodeB (Evolutional Node B, eNB or eNodeB) in an LTE system. Alternatively, the network device may be a relay station, an access point, an in-vehicle device, a wearable device, an access network device in a future 5G network, such as a next-generation base station, or an access network device in a future evolved public land mobile network (Public Land Mobile Network, PLMN).

This application describes the embodiments with reference to a terminal device. The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communications device, a user agent, a user apparatus, or the like. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, a terminal device in a future 5G network, a terminal device in a PLMN, or the like.

For ease of description of the embodiments of this application, some concepts are first defined. An LTE system is used as an example for description, but it does not mean that the embodiments of this application are applicable only to the LTE system. Actually, the solutions provided in the embodiments of this application may be applied to any wireless communications system in which data transmission is performed through scheduling.

### 1. Transmission duration (Transmission Duration)

In the embodiments of this application, a time domain resource may be identified by transmission duration. The transmission duration includes N symbols (symbol), where N is a positive integer. A time length of the transmission duration is not limited in this application, that is, a value of N is not limited. For example, the transmission duration may be one subframe (subframe), one timeslot (slot), one mini-timeslot (mini-slot), short transmission duration (STD, short Transmission Duration), or a short transmission time interval (sTTI, short Transmission Time Interval).

In an existing LTE system, for a normal cyclic prefix (Normal cyclic prefix, normal CP), one subframe includes 14 symbols (symbol); and for an extended CP (Extended cyclic prefix, extended CP), one subframe includes 12 symbols (symbol). In a future evolved system, one subframe may include 14 symbols or another quantity of symbols.

In an existing LTE system, one slot includes 7 or 6 symbols. In a future evolved system, one slot may include 7, 6, or 14 symbols or another quantity of symbols.

The STD or the sTTI may include 2, 3, or 7 symbols.

A time length of one symbol is not limited in this application. For example, for different subcarrier spacing, a length of one symbol may vary. Without loss of generality, symbols include an uplink symbol and a downlink symbol. The uplink symbol is referred to as a single carrier-frequency division multiple access (single carrier-frequency division multiple access, SC-FDMA) symbol or an orthogonal frequency division multiplexing (orthogonal frequency division multiplexing, OFDM) symbol. The downlink symbol is referred to as an OFDM symbol. It should be noted that, if a new uplink multiple access manner or downlink multiple access manner is introduced into a subsequent technology, the term "symbol" may still be used. An uplink multiple access manner and a downlink multiple access manner are not limited in this application.

### 2. HARQ-ACK information

The HARQ-ACK information indicates a downlink data receiving status, and may also be referred to as HARQ-ACK feedback information. The receiving status of downlink data includes acknowledgement (Acknowledgement, ACK) and negative acknowledgement (Negative Acknowledgement, NACK). The ACK indicates a downlink data receiving success, and the NACK indicates a downlink data receiving failure. Optionally, the receiving status of downlink data further includes discontinuous transmission (Discontinuous Transmission, DTX). The DTX indicates that downlink data is not received.

### 3. SR transmission status

The SR transmission status includes positive SR transmission (positive SR transmission) and negative SR transmission (negative SR transmission). The positive SR transmission means that a terminal device needs to send an uplink resource request. The negative SR transmission means that a terminal device does not need to send an uplink resource request.

Considering subsequent further evolution, the positive SR transmission may include more statuses. For example, the positive SR transmission includes scheduling requests of at least two transport block sizes (TBS, transport block size) and/or scheduling requests of at least two different services (for example, Enhanced Mobile Broadband eMBB and ultra-reliable and low latency communications URLLC). In this case, the SR transmission status includes at least two types of positive SR transmission and one type of negative SR transmission. For example, the positive SR transmission includes first positive SR transmission and second positive SR transmission. The first positive SR transmission is positive SR transmission of a first TBS, and the second positive SR transmission is positive SR transmission of a second TBS. Alternatively, the first positive SR transmission is positive SR transmission of URLLC, and the second positive SR transmission is positive SR transmission of eMBB. For example, the positive SR transmission includes first positive SR transmission, second positive SR transmission, third positive SR transmission, and fourth positive SR transmission. The first positive SR transmission is positive SR transmission of a first TBS and URLLC, the second positive SR transmission is positive SR transmission of a second TBS and URLLC, the third positive SR transmission is positive SR transmission of the first TBS and eMBB, and the fourth positive SR transmission is positive SR transmission of the second TBS and eMBB.

### 4. PUCCH format

The embodiments of this application include seven PUCCH formats: a PUCCH format X, a PUCCH format Ya, a PUCCH format Yb, a PUCCH format M, a PUCCH format N, a PUCCH format O, and a PUCCH format N. It should be understood that X, Ya, Yb, M, N, O, and P are used for ease of description, and may be replaced with any reference signs subsequently.

In the PUCCH format X, different PUCCH resources are used to indicate different receiving statuses of the downlink data. A PUCCH resource is identified by a cyclic shift (CS, cyclic shift). In this case, in the PUCCH format X, different cyclic shifts are used to indicate different receiving statuses of the downlink data. Alternatively, a PUCCH resource is identified by at least one of a CS and an RB. In this case, in the PUCCH format X, different cyclic shifts and/or different RBs are used to indicate different receiving statuses of the downlink data. Alternatively, a PUCCH resource is identified by at least one of a CS, an orthogonal sequence (orthogonal sequence), and an RB. In this case, in the PUCCH format X, different cyclic shifts, different orthogonal sequences, and/or different RBs are used to indicate different receiving statuses of the downlink data. It should be noted that, to effectively utilize resources, a plurality of terminal devices may send respective PUCCHs on same one or more resource blocks (resource block, RB for short). In other words, there may be a plurality of PUCCH resources on the same one or more RBs. The plurality of PUCCHs on the same one or more resource blocks may be implemented through orthogonal code division multiplexing (orthogonal code division multiplexing, OCDM for short): A cyclic shift (cyclic shift) is used in frequency domain, or an orthogonal sequence (orthogonal sequence) is used in time domain, or a cyclic shift is used in frequency domain and an orthogonal sequence is used in time domain, where the cyclic shift is also referred to as phase rotation (phase rotation). Naturally, different PUCCHs are sent on different one or more RBs, namely, the different one or more RBs represent different PUCCH resources. The PUCCH format Ya is used to transmit one explicit bit, and is a PUCCH format based on a demodulation reference signal (DMRS, Demodulation Reference Signal). The one explicit bit indicates a downlink data receiving status. For example, binary (binary) "1" indicates ACK, and binary "0" indicates NACK. For example, the one explicit bit is modulated to one complex-valued symbol (complex-valued symbol), and the one complex-valued symbol is further multiplied by one or more cyclically shifted sequences (cyclically shifted sequence), and undergoes a possible time domain spread spectrum operation (block-wise spread with orthogonal sequence) and the like. When sending a PUCCH that carries the one explicit bit, a terminal device also needs to send a DMRS. Because the DMRS is used to demodulate the PUCCH, a network device may demodulate the PUCCH based on the DMRS sent by the terminal device.

The PUCCH format Yb is used to transmit two explicit bits, and is a PUCCH format based on a DMRS. The two explicit bits indicate receiving statuses of the downlink data. For example, binary (binary) "11" indicate (ACK, ACK), binary "00" indicate (NACK, NACK), binary (binary) "10" indicate (ACK, NACK), and binary (binary) "01" indicate (NACK, ACK). Except that a quantity of bits is different, for others, refer to the descriptions of the PUCCH format Ya. The PUCCH format M indicates an SR transmission status based on presence or absence of PUCCH transmission. For example, when there is PUCCH transmission on a PUCCH resource allocated to an SR, it indicates positive SR transmission; otherwise, when there is no PUCCH transmission on a PUCCH resource allocated to an SR, it indicates negative SR transmission. The PUCCH format N is used to transmit k explicit bits, and is a PUCCH format based on a demodulation reference signal (DMRS, Demodulation Reference Signal), where k is a positive integer. The k explicit bits indicate at least two SR transmission statuses, or the k explicit bits indicate at least two types of positive SR transmission. For example, k = 1, and the one explicit bit indicates two types of positive SR transmission (first positive SR transmission and second positive SR transmission). Binary (binary) "1" indicates the first positive SR transmission, and binary (binary) "0" indicates the second positive SR transmission. Alternatively, binary "0" indicates the first positive SR transmission, and a binary "1" indicates the second positive SR transmission. For example, k = 2, and the two explicit bits indicate four types of positive SR transmission. Except that indication information is different, for others, refer to the descriptions of the PUCCH format Ya. In the PUCCH format O, different PUCCH resources are used to indicate different positive SR transmission statuses or SR transmission statuses. For a PUCCH resource, refer to the descriptions of the PUCCH format X.

The PUCCH format P is used to transmit n explicit bits, and is a PUCCH format based on a DMRS. The n explicit bits indicate a downlink data receiving status and at least two SR transmission statuses. Except that a quantity of bits is different, for others, refer to the descriptions of the PUCCH format Ya.

It should be noted that, in the PUCCH format Ya, Yb, N, or P, a DMRS and a PUCCH may be located in a same symbol or different symbols. This is not limited in this application.

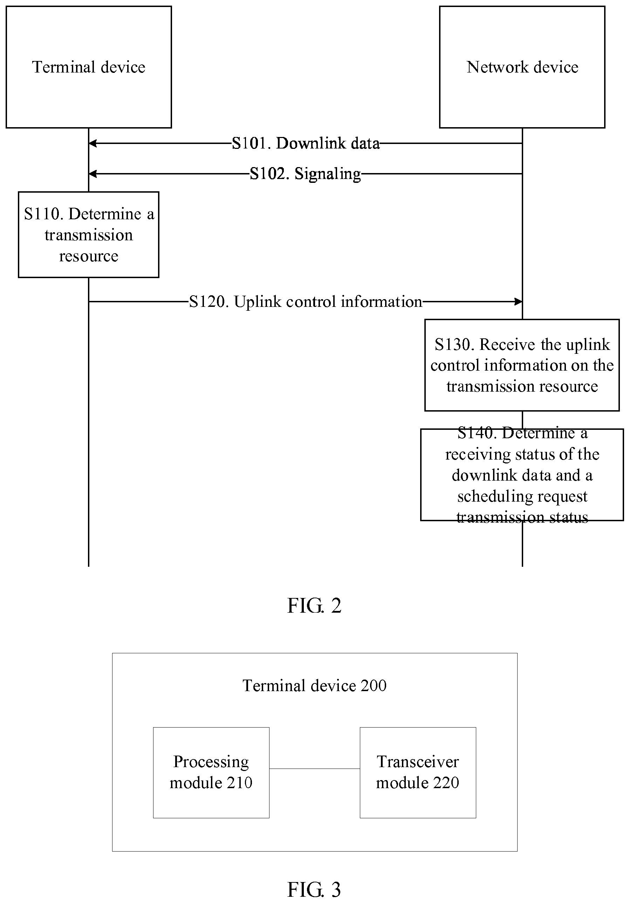

FIG. 2 is a schematic flowchart of a control information transmission method 100 according to an embodiment of this application. As shown in FIG. 2, a network device is corresponding to the network device in FIG. 1, and a terminal device may be corresponding to the terminal device in FIG. 1. The method 100 includes the following steps.

S110. The terminal device determines a transmission resource based on a receiving status of downlink data and a scheduling request transmission status, where the transmission resource is one of N first resources or one of M second resources, the N first resources are corresponding to N receiving statuses of the downlink data, the M second resources are used to transmit a scheduling request, N is a positive integer greater than 1, and M is a positive integer.

S120. The terminal device sends uplink control information on the transmission resource.

S130. The network device receives the uplink control information on the transmission resource. S140. The network device determines a receiving status of downlink data and a scheduling request transmission status based on the transmission resource and the uplink control information.

Specifically, the terminal device determines the transmission resource based on the receiving status of downlink data and the scheduling request transmission status, where the transmission resource is one of the N first resources and the M second resources, the N first resources are corresponding to N receiving statuses of the downlink data, the M second resources are used to transmit a scheduling request, N is a positive integer greater than 1, and M is a positive integer; the terminal device sends UCI to the network device on the transmission resource; and the network device determines the receiving status of downlink data and status of scheduling request transmission based on the transmission resource and the UCI.

It should be understood that, the receiving status of downlink data in S110 and the receiving status of downlink data in S140 may be the same, or may be different. This application is not limited thereto. For example, in the following solution 1, although the receiving status of downlink data determined by the terminal device is ACK, reporting is performed based on NACK. In this case, the receiving status of downlink data determined by the network device is NACK.

Optionally, before the terminal device determines the transmission resource based on the receiving status of downlink data and the scheduling request transmission status, the method 100 further includes the following step:
S101. The terminal device receives downlink data.

After receiving the downlink data, the terminal device needs to determine the downlink data receiving status. For example, the downlink data is data carried on a PDSCH. The downlink data may be sent by the network device.

Optionally, if the downlink data includes only one transport block (Transport Block, TB) or one CW, the receiving status of downlink data is a receiving status of the one TB, and includes ACK and NACK, or includes ACK, NACK, and DTX.

Optionally, if the downlink data includes two TBs, the receiving status of downlink data is a spatial bundling (spatial bundling) result of receiving statuses respectively corresponding to the two TBs, and includes ACK and NACK, or includes ACK, NACK, and DTX. Spatial bundling is to perform an AND logical operation on receiving statuses of a plurality of (for example, 2) TBs/codewords of one piece of downlink data. When both the receiving statuses of the two TBs are ACK, the spatial bundling result is ACK; or when a receiving status of at least one of the TBs is NACK, the spatial bundling result is NACK. Optionally, when both the receiving statuses of the two TBs are DTX, the spatial bundling result is DTX.

Optionally, if the downlink data includes two TBs, the receiving status of downlink data includes receiving statuses respectively corresponding to the two TBs, and includes (ACK, ACK), (NACK, NACK), (ACK, NACK), and (NACK, ACK). Optionally, the receiving status of downlink data further includes (DTX, DTX). It should be noted that the receiving status of downlink data is represented in a form of (X, Y), where X indicates a receiving status of a first TB, and Y indicates a receiving status of a second TB.

It should be understood that the N first resources may be N PUCCH resources used to transmit HARQ-ACK information, and the M second resources may be M PUCCH resources used to transmit SR information. Optionally, N is 2 or 4, and M is 1 or 2.

The N first resources are corresponding to N receiving statuses of the downlink data. The N receiving statuses of the downlink data are N receiving statuses of the downlink data of one piece of downlink data, and the one piece of downlink data is in one subframe and one serving cell.

Optionally, N is 2, and the two first resources include a PUCCH resource allocated to ACK and a PUCCH resource allocated to NACK. That N is 2 is applicable to a case in which the receiving status of downlink data is a receiving status of one TB and a case in which the receiving status of downlink data is a spatial bundling result of receiving statuses respectively corresponding to two TBs.

Optionally, N is 4, and the four first resources are corresponding to four receiving statuses of the downlink data, and include a PUCCH resource allocated to (ACK, ACK), a PUCCH resource allocated to (NACK, NACK), a PUCCH resource allocated to (ACK, NACK), and a PUCCH resource allocated to (NACK, ACK). That N is 4 is applicable to a case in which the receiving status of downlink data includes receiving statuses respectively corresponding to two TBs.

Optionally, before S110, the method 100 further includes:
receiving, by the terminal device, first resource indication information.

Specifically, the first resource indication information indicates the N first resources. The first resource is identified by a CS. Alternatively, the first resource is identified by at least one of a CS and an RB. Alternatively, the first resource is identified by at least one of a CS, an orthogonal sequence, and an RB.

For example, N is 2, and the two first resources have different CSs but have a same RB.

For another example, N is 2, and the two first resources have a same CS but have different RBs. For still another example, N is 2, and the two first resources have different CSs and different RBs.

The network device may configure the N first resources based on a current channel condition and load status. If a multipath latency of a channel is large, a relatively small quantity of CSs need to be configured on one RB. Therefore, the network device may configure the N first resources on at least two RBs.

Optionally, before S110, the method 100 further includes:
receiving, by the terminal device, second resource indication information.

Specifically, the second resource indication information indicates the M second resources.

For example, M is 1, and the one second resource is a PUCCH resource allocated to an SR. In this case, the network device configures only one second resource, in other words, the terminal device sends an SR only on the one second resource.

For another example, M is 2, and the network device configures two second resources. Optionally, the terminal device may send an SR on one second resource, or may send an SR on the other second resource.

In this embodiment of this application, after determining the receiving status of downlink data and the SR transmission status, the terminal device determines the transmission resource based on the receiving status of downlink data and the SR transmission status.

In this embodiment of this application, if the SR transmission status is negative SR transmission, and the receiving status of downlink data is one of the N receiving statuses of the downlink data, S110 is specifically: determining, by the terminal device, that the transmission resource is one of the N first resources. S120 is specifically: sending, by the terminal device, the uplink control information on the transmission resource based on the PUCCH format X. In this case, the uplink control information indicates the receiving status of downlink data and the negative SR transmission.

Compared with the PUCCH format Ya and the PUCCH format Yb, the PUCCH format X has better performance in a scenario with a same quantity of symbols. Therefore, after a quantity of PUCCH symbols is reduced to 1, 2, or 3 symbols, to enhance performance of receiving HARQ-ACK information, the sequence-based PUCCH format X is introduced.

In a possible implementation, if the SR transmission status is the negative SR transmission and N is 2, in S110, the transmission resource may be determined in the following manners. Manner 1: If the receiving status of the downlink data is the ACK and the SR transmission status is the negative SR transmission, the terminal device determines that the transmission resource is a PUCCH resource allocated to the ACK. In this case, the uplink control information indicates the ACK and the negative SR transmission.

Manner 2: If the receiving status of the downlink data is the NACK and the SR transmission status is the negative SR transmission, the terminal device determines that the transmission resource is a PUCCH resource allocated to the NACK. In this case, the uplink control information indicates the NACK and the negative SR transmission.

In another possible implementation, if the SR transmission status is the negative SR transmission and N is 4, in S110, the transmission resource may be determined in the following manners.

Manner 1: If the receiving status of downlink data is the (ACK, ACK) and the SR transmission status is the negative SR transmission, the terminal device determines that the transmission resource is a PUCCH resource allocated to the (ACK, ACK). In this case, the uplink control information indicates the (ACK, ACK) and the negative SR transmission.

Manner 2: If the receiving status of downlink data is the (NACK, NACK) and the SR transmission status is the negative SR transmission, the terminal device determines that the transmission resource is a PUCCH resource allocated to the (NACK, NACK). In this case, the uplink control information indicates the (NACK, NACK) and the negative SR transmission. Manner 3: If the receiving status of downlink data is the (ACK, NACK) and the SR transmission status is the negative SR transmission, the terminal device determines that the transmission resource is a PUCCH resource allocated to the (ACK, NACK). In this case, the uplink control information indicates the (ACK, NACK) and the negative SR transmission. Manner 4: If the receiving status of downlink data is the (NACK, ACK) and the SR transmission status is the negative SR transmission, the terminal device determines that the transmission resource is a PUCCH resource allocated to the (NACK, ACK). In this case, the uplink control information indicates the (NACK, ACK) and the negative SR transmission.

In this embodiment of this application, when N is 2 or 4, M is 2, the SR transmission status is positive SR transmission, and the downlink data receiving status is DTX, the terminal device determines, based on signaling or a predefined rule, that the transmission resource is a first or second PUCCH resource allocated to an SR. Optionally, the signaling is higher layer signaling.

Because there is only one positive SR transmission status, when two PUCCH resources allocated to an SR are configured, it needs to determine which one is used.

Optionally, N is 2 or 4. The two receiving statuses of the downlink data include positive acknowledgement ACK and negative acknowledgement NACK, or the four receiving statuses of the downlink data include (ACK, ACK), (NACK, NACK), (ACK, NACK), and (NACK, ACK). That the terminal device determines a transmission resource based on a receiving status of downlink data and a scheduling request transmission status includes:
if the scheduling request transmission status is positive scheduling request transmission, determining, by the terminal device, that the transmission resource is one of the M second resources.

The uplink control information indicates one of the N data receiving statuses and the positive scheduling request transmission. That the network device receives the uplink control information on the transmission resource includes:
determining, by the network device, that the transmission resource is one of the M second resources; and
receiving, by the network device, the uplink control information on the one of the M second resources.

That the network device determines a receiving status of downlink data and a scheduling request transmission status based on the transmission resource and the uplink control information includes:
determining, by the network device based on the one of the M second resources and the uplink control information, that the receiving status of downlink data is one of the N data receiving statuses and the scheduling request transmission status is positive scheduling request transmission.

In this embodiment of this application, if the SR transmission status is the positive SR transmission, in S110, the transmission resource may be determined by using the following solutions (the uplink control information is the uplink control information in S120).

Optionally (marked as a solution 1), M is 1, and that the terminal device determines a transmission resource based on a receiving status of downlink data and an SR transmission status, and sends uplink control information on the transmission resource includes:
if the receiving status of downlink data is one of the two receiving statuses of the downlink data, or the receiving status of downlink data is one of the four receiving statuses of the downlink data, and the SR transmission status is the positive SR transmission, determining, by the terminal device, that the transmission resource is a PUCCH resource allocated to an SR. In this case, the uplink control information indicates the NACK and the positive SR transmission, or the uplink control information indicates the (NACK, NACK) and the positive SR transmission, or the uplink control information indicates NACK/DTX and the positive SR transmission, or the uplink control information indicates (NACK, NACK)/(DTX, DTX) and the positive SR transmission.

The network device determines, based on the one second resource, that the receiving status of the downlink data is the NACK or the (NACK, NACK) and the scheduling request transmission status is the positive SR transmission. Alternatively, the network device determines, based on the one second resource, that the receiving status of the downlink data is NACK/DTX or (NACK, NACK)/(DTX, DTX) and the scheduling request transmission status is the positive SR transmission.

In this manner, because only one PUCCH resource is allocated to an SR, when collision with SR occurs, if the SR resource needs to be used to indicate a downlink data status, only one of the ACK and the NACK can be selected. Considering that the NACK is more important than the ACK, a priority of the ACK is lower. To be specific, when the ACK collides with the positive SR transmission, the ACK is discarded and not indicated, and the network device treats the ACK as the NACK; however, when the NACK collides with the positive SR transmission, both the NACK and the positive SR transmission are indicated. In this solution, SR transmission is ensured, and an increase in an uplink resource request latency is avoided. An only disadvantage is that ACK transmission is delayed, and a downlink data latency may be affected.

It should be understood that S120 is specifically: sending, by the terminal device, the uplink control information on the transmission resource based on the PUCCH format M.

Optionally (marked as a solution 2), N is 2, M is 1, and that the terminal device determines a transmission resource based on a receiving status of downlink data and an SR transmission status, and sends uplink control information on the transmission resource includes the following manner: If the receiving status of the downlink data is the ACK or the NACK and the SR transmission status is the positive SR transmission, the terminal device determines that the transmission resource is a PUCCH resource allocated to an SR.

The uplink control information indicates the positive scheduling request transmission and the downlink data receiving status. That the terminal device sends uplink control information on the transmission resource includes:
sending, by the terminal device on the one second resource, a PUCCH used to carry 1-bit information, and a demodulation reference signal used to demodulate the PUCCH, where the 1-bit information indicates the downlink data receiving status.

The network device receives, on the one second resource, the PUCCH used to carry the 1-bit information, and the demodulation reference signal used to demodulate the PUCCH, where the 1-bit information indicates the downlink data receiving status.

The network device determines, based on the one second resource, that the scheduling request transmission status is the positive SR transmission; and determines, based on the 1-bit information, that the receiving status of downlink data is one of the two receiving statuses of the downlink data. For example, when the 1-bit information is binary (binary) "1", the network device determines that the receiving status of the downlink data is the ACK; otherwise, when the 1-bit information is binary (binary) "0", the network device determines that the receiving status of the downlink data is the NACK.

It should be understood that S120 is specifically: sending, by the terminal device, the uplink control information on the transmission resource based on the PUCCH format Ya.

Performance of the PUCCH format Ya is poorer than that of the PUCCH format X. However, in this solution, to make an SR, the ACK, and the NACK have a same priority, when HARQ-ACK information collides with an SR, the HARQ-ACK information and the SR are sent by using the PUCCH format Ya, to be specific, when collision occurs, no status is discarded.

Optionally (marked as a solution 3), N is 4, M is 1, and that the terminal device determines a transmission resource based on a receiving status of downlink data and an SR transmission status, and sends uplink control information on the transmission resource includes the following manner:
If the receiving status of downlink data is the (ACK, ACK), the (NACK, NACK), the (ACK, NACK), or the (NACK, ACK) and the SR transmission status is the positive SR transmission, determining, by the terminal device, that the transmission resource is a PUCCH resource allocated to an SR.

The uplink control information indicates the positive scheduling request transmission and the downlink data receiving status. That the terminal device sends uplink control information on the transmission resource includes:
sending, by the terminal device on the one second resource, a PUCCH used to carry 2-bit information, and a demodulation reference signal used to demodulate the PUCCH, where the 2-bit information indicates the downlink data receiving status.

The network device receives, on the one second resource, the PUCCH used to carry the 2-bit information, and the demodulation reference signal used to demodulate the PUCCH, where the 2-bit information indicates the downlink data receiving status.

The network device determines, based on the one second resource, that the scheduling request transmission status is the positive SR transmission; and determines, based on the 2-bit information, that the receiving status of downlink data is one of the four receiving statuses of the downlink data.

It should be understood that S120 is specifically: sending, by the terminal device, the uplink control information on the transmission resource based on the PUCCH format Yb.

Performance of the PUCCH format Yb is poorer than that of the PUCCH format X. However, in this solution, to make an SR and HARQ-ACK information have a same priority, when HARQ-ACK information collides with an SR, the HARQ-ACK information and the SR are sent by using the PUCCH format Yb, to be specific, when collision occurs, no status is discarded. Optionally (marked as a solution 4), N is 2, M is 2, and that the terminal device determines a transmission resource based on a receiving status of downlink data and a scheduling request transmission status, and sends uplink control information on the transmission resource includes at least one of the following manners.

Manner 1: If the receiving status of the downlink data is the ACK and the SR transmission status is the positive SR transmission, the terminal device determines that the transmission resource is a first PUCCH resource allocated to an SR. In this case, the uplink control information indicates the ACK and the positive SR transmission. Correspondingly, that the network device determines a receiving status of downlink data and a scheduling request transmission status based on the transmission resource and the uplink control information includes:
determining, by the network device based on a first second-resource, that the receiving status of the downlink data is the ACK and the scheduling request transmission status is the positive SR transmission.

Manner 2: If the receiving status of downlink data is NACK and the SR transmission status is the positive SR transmission, the terminal device determines that the transmission resource is a second PUCCH resource allocated to an SR. In this case, the uplink control information indicates the NACK and the positive SR transmission.

Correspondingly, the network device determines, based on a second second-resource, that the receiving status of the downlink data is the NACK and the scheduling request transmission status is the positive SR transmission.

The two second resources include the first second-resource and the second second-resource. It should be understood that there is no order between the first second-resource and the second second-resource, and the first second-resource and the second second-resource are merely used to identify one of the two second resources.

It should be understood that there is only one positive SR transmission status, and step 120 is specifically: sending, by the terminal device, the uplink control information on the transmission resource based on the PUCCH format M.

In this solution, HARQ-ACK information and an SR have a same priority. Therefore, when HARQ-ACK information collides with an SR, both the HARQ-ACK information and the SR can be indicated. An only disadvantage is that, although there is only one positive SR transmission status, two SR resources need to be reserved, and PUCCH overheads are relatively large.

Optionally (marked as a solution 5), N is 2, M is 1, and that the terminal device determines a transmission resource based on a receiving status of downlink data and a scheduling request transmission status, and sends uplink control information on the transmission resource includes at least one of the following manners.

Manner 1: If the receiving status of the downlink data is the ACK and the SR transmission status is the positive SR transmission, the terminal device determines that the transmission resource is a PUCCH resource allocated to an SR. In this case, the uplink control information indicates the ACK and the positive SR transmission.

Correspondingly, that the network device receives the uplink control information on the transmission resource includes:
determining, by the network device, that the transmission resource is the PUCCH resource allocated to the SR; and
receiving, by the network device, the uplink control information on the PUCCH resource allocated to the SR.

That the network device determines a receiving status of downlink data and a scheduling request transmission status based on the transmission resource and the uplink control information includes: determining, by the network device based on the PUCCH resource allocated to the SR, that the receiving status of the downlink data is the ACK and the scheduling request transmission status is the positive SR transmission.

Manner 2: If the receiving status of the downlink data is the NACK and the SR transmission status is the positive SR transmission, the terminal device determines that the transmission resource is a PUCCH resource allocated to the NACK. In this case, the uplink control information indicates the NACK and negative SR transmission.

Correspondingly, that the network device receives the uplink control information on the transmission resource includes:
determining, by the network device, that the transmission resource is the PUCCH resource allocated to the NACK; and
receiving, by the network device, the uplink control information on a first resource corresponding to the NACK.

That the network device determines a receiving status of downlink data and a scheduling request transmission status based on the transmission resource and the uplink control information includes: determining, by the network device based on the first resource corresponding to the NACK, that the receiving status of the downlink data is the NACK and the negative SR transmission.

It should be understood that S120 is specifically: sending, by the terminal device, the uplink control information on the transmission resource based on the PUCCH format M.

In this solution, a priority of an SR is lower than that of the NACK. However, considering that an occurrence probability of the NACK is relatively low, impact on an SR latency is relatively small. However, in this solution, when the receiving status of downlink data is DTX and the SR transmission status is the positive SR transmission, the terminal device also transmits the uplink control information on a resource allocated to an SR. Therefore, when the network device sends downlink data but the terminal device considers a downlink data receiving status as DTX, and the network device receives the uplink control information transmitted on the resource allocated to the SR and considers a receiving status of downlink data as ACK, a problem occurs. Therefore, reliability is relatively poor.

Optionally (marked as a solution 6), N is 2, M is 1, and that the terminal device determines a transmission resource based on a receiving status of downlink data and an SR transmission status, and sends uplink control information on the transmission resource includes at least one of the following manners.

Manner 1: If the receiving status of the downlink data is the ACK and the SR transmission status is the positive SR transmission, the terminal device determines that the transmission resource is a PUCCH resource allocated to the ACK. In this case, the uplink control information indicates the ACK and the negative SR transmission.

Correspondingly, that the network device receives the uplink control information on the transmission resource includes:
determining, by the network device, that the transmission resource is the PUCCH resource allocated to the ACK; and
receiving, by the network device, the uplink control information on the PUCCH resource allocated to the ACK.

The network device determines, based on the PUCCH resource allocated to the ACK, that the receiving status of the downlink data is the ACK and the scheduling request transmission status is the negative SR transmission.

Manner 2: If the receiving status of the downlink data is the NACK and the SR transmission status is the positive SR transmission, the terminal device determines that the transmission resource is a PUCCH resource allocated to an SR. In this case, the uplink control information indicates the NACK and the positive SR transmission.

Correspondingly, that the network device receives the uplink control information on the transmission resource includes:
determining, by the network device, that the transmission resource is the PUCCH resource allocated to the SR; and
receiving, by the network device, the uplink control information on the PUCCH resource allocated to the SR.

The network device determines, based on the PUCCH resource allocated to the SR, that the receiving status of the downlink data is the NACK and the scheduling request transmission status is the positive SR transmission.

It should be understood that S120 is specifically: sending, by the terminal device, the uplink control information on the transmission resource based on the PUCCH format M.

In this solution, mis-identification between DTX and ACK in the foregoing solution is avoided, and receiving performance is robust. However, a priority of an SR is lower than that of the ACK. Considering that an occurrence probability of the ACK is relatively high, impact on an SR latency may be relatively large.

Optionally (marked as a solution 7), N is 2, M is 2, and that the terminal device determines a transmission resource based on a receiving status of downlink data and an SR transmission status, and sends uplink control information on the transmission resource includes at least one of the following manners.

Manner 1: If the receiving status of the downlink data is the NACK or the ACK and the SR transmission status is first positive SR transmission, the terminal device determines that the transmission resource is a PUCCH resource allocated to the first positive SR transmission. In this case, the uplink control information indicates the NACK and the first positive SR transmission, or the uplink control information indicates NACK/DTX and the first positive SR transmission.

Correspondingly, that the network device receives the uplink control information on the transmission resource includes:
determining, by the network device, that the transmission resource is the PUCCH resource allocated to the first positive SR transmission; and
receiving, by the network device, the uplink control information on the PUCCH resource allocated to the first positive SR transmission.

The network device determines, based on the PUCCH resource allocated to the first positive SR transmission, that the receiving status of the downlink data is the NACK/DTX and the first positive SR transmission.

Manner 2: If the receiving status of the downlink data is the NACK or the ACK and the SR transmission status is second positive SR transmission, the terminal device determines that the transmission resource is a PUCCH resource allocated to the second positive SR transmission. In this case, the uplink control information indicates the NACK and the second positive SR transmission, or the uplink control information indicates NACK/DTX and the PUCCH resource of the second positive SR transmission.

Correspondingly, that the network device receives the uplink control information on the transmission resource includes:
determining, by the network device, that the transmission resource is the PUCCH resource of the second positive SR transmission; and
receiving, by the network device, the uplink control information on the PUCCH resource of the second positive SR transmission.

The network device determines, based on the PUCCH resource of the second positive SR transmission, that the receiving status of the downlink data is the NACK/DTX and the PUCCH resource of the second positive SR transmission.

It should be understood that, if there are two positive SR transmission statuses, step 120 is specifically: sending, by the terminal device, the uplink control information on the transmission resource based on the PUCCH format O.

In this solution, if an SR resource needs to be used to indicate a downlink data status, only one of the ACK and the NACK can be selected. Considering that the NACK is more important than the ACK, a priority of the ACK is lower. In this solution, SR transmission is ensured, and an increase in an uplink resource request latency is avoided. An only disadvantage is that ACK transmission is delayed, and a downlink data latency may be affected.

Optionally (marked as a solution 8), N is 2, M is 2, and that the terminal device determines a transmission resource based on a receiving status of downlink data and a scheduling request transmission status, and sends uplink control information on the transmission resource includes at least one of the following manners.

Manner 1: If the receiving status of the downlink data is the ACK and the SR transmission status is first or second positive SR transmission, the terminal device determines that the transmission resource is a PUCCH resource allocated to the first or second positive SR transmission. In this case, the uplink control information indicates the ACK and the first or second positive SR transmission.

Correspondingly, that the network device receives the uplink control information on the transmission resource includes:
determining, by the network device, that the transmission resource is the PUCCH resource allocated to the first or second positive SR transmission; and
receiving, by the network device, the uplink control information on the PUCCH resource allocated to the first or second positive SR transmission.

The network device determines, based on the PUCCH resource allocated to the first or second positive SR transmission, that the receiving status of the downlink data is the ACK and the scheduling request transmission status is the first or second positive SR transmission.

Manner 2: If the receiving status of the downlink data is the NACK and the SR transmission status is the first or second positive SR transmission, the terminal device determines that the transmission resource is a PUCCH resource allocated to the NACK. In this case, the uplink control information indicates the NACK and negative SR transmission.

Correspondingly, that the network device receives the uplink control information on the transmission resource includes:
determining, by the network device, that the transmission resource is the PUCCH resource allocated to the NACK; and
receiving, by the network device, the uplink control information on the PUCCH resource allocated to the NACK.

The network device determines, based on the PUCCH resource allocated to the NACK, that the receiving status of the downlink data is the NACK and the negative SR transmission.

It should be understood that, if there are two positive SR transmission statuses, step 120 is specifically: sending, by the terminal device, the uplink control information on the transmission resource based on the PUCCH format O.

In this solution, a priority of an SR is lower than that of the NACK. However, considering that an occurrence probability of the NACK is relatively low, impact on an SR latency is relatively small.

Optionally (marked as a solution 9), N is 2, M is 2, and that the terminal device determines a transmission resource based on a receiving status of downlink data and a scheduling request transmission status, and sends uplink control information on the transmission resource includes at least one of the following determining manners.

Manner 1: If the receiving status of the downlink data is the ACK and the SR transmission status is first or second positive SR transmission, the terminal device determines that the transmission resource is a PUCCH resource allocated to the ACK. In this case, the uplink control information indicates the ACK and negative SR transmission.

Correspondingly, that the network device receives the uplink control information on the transmission resource includes:
determining, by the network device, that the transmission resource is the PUCCH resource allocated to the ACK; and
receiving, by the network device, the uplink control information on the PUCCH resource allocated to the ACK.

The network device determines, based on the PUCCH resource allocated to the ACK, that the receiving status of the downlink data is the ACK and the scheduling request transmission status is the negative SR transmission.

Manner 2: If the receiving status of the downlink data is the NACK and the SR transmission status is first or second positive SR transmission, the terminal device determines that the transmission resource is a PUCCH resource allocated to the first or second positive SR transmission. In this case, the uplink control information indicates the NACK and the first or second positive SR transmission.

Correspondingly, that the network device receives the uplink control information on the transmission resource includes:
determining, by the network device, that the transmission resource is the PUCCH resource allocated to the first or second positive SR transmission; and
receiving, by the network device, the uplink control information on the PUCCH resource allocated to the first or second positive SR transmission.

The network device determines, based on the PUCCH resource allocated to the first or second positive SR transmission, that the receiving status of the downlink data is the NACK and the first or second positive SR transmission.

It should be understood that, if there are two positive SR transmission statuses, step 120 is specifically: sending, by the terminal device, the uplink control information on the transmission resource based on the PUCCH format O.

In this solution, mis-identification between DTX and ACK is avoided, and receiving performance is robust. However, a priority of an SR is lower than that of the ACK. Considering that an occurrence probability of the ACK is relatively high, impact on an SR latency may be relatively large.

Optionally (marked as a solution 10), N is 2 or 4, M is 1, and that the terminal device determines a transmission resource based on a receiving status of downlink data and a scheduling request transmission status, and sends uplink control information on the transmission resource includes at least one of the following determining manners.

If the receiving status of downlink data is any one of the two or four statuses, and the SR transmission status is one of at least two types of positive SR transmission, the terminal device determines that the transmission resource is a PUCCH resource allocated to an SR;
the terminal device sends, on the one second resource, a PUCCH used to carry n-bit information, and a demodulation reference signal used to demodulate the PUCCH, where the n-bit information indicates the receiving status of downlink data and the SR transmission status;
the network device receives, on the PUCCH resource allocated to the SR, the PUCCH used to carry the n-bit information, and the demodulation reference signal used to demodulate the PUCCH, where the n-bit information indicates the receiving status of downlink data and the SR transmission status; and
the network device determines, based on the PUCCH resource allocated to the SR and the n-bit information, that the receiving status of downlink data is one of the two receiving statuses of the downlink data or one of the four receiving statuses of the downlink data, and the SR transmission status is one of the at least two types of positive SR transmission.

It should be understood that, if there are at least two positive SR transmission statuses, step 120 is specifically: sending, by the terminal device, the uplink control information on the transmission resource based on the PUCCH format P.

In this solution, an SR and HARQ-ACK information are equally important, namely, have a same priority.

Optionally, before the terminal device determines the transmission resource based on the receiving status of downlink data and the scheduling request transmission status, the method 100 further includes the following step:
S102. The terminal device receives signaling, where the signaling instructs the terminal device to determine the transmission resource by using one of the foregoing control information transmission solutions and send the uplink control information on the transmission resource.

Correspondingly, before the terminal device receives the signaling, the method further includes: sending, by the network device, the signaling, where the signaling instructs the terminal device to determine the transmission resource by using one of the foregoing control information transmission solutions and send the uplink control information on the transmission resource.

Optionally, the signaling is higher layer signaling. The higher layer signaling (Higher Layer Signaling) is relative to physical layer signaling, is signaling coming from a higher layer (layer) and having a lower transmit frequency, and includes radio resource control (RRC, Radio Resource Control) signaling and Media Access Control (MAC, Media Access Control) signaling.

According to the control information transmission method in this embodiment of this application, a problem about how to transmit an SR and how to simultaneously transmit an SR and HARQ-ACK information after a quantity of PUCCH symbols is reduced to 1, 2, or 3 symbols is effectively resolved.

An embodiment of this application further provides a control information transmission method. The method includes:
determining, by a terminal device, that a transmission resource is a PUCCH resource allocated to an SR;
sending, by the terminal device, uplink control information on the transmission resource, where the uplink control information includes 1-bit or 2-bit HARQ-ACK information and at least 2-bit SR transmission status indication information;
receiving, by a network device, the uplink control information on the PUCCH resource allocated to the SR; and
determining, by the network device, a receiving status of downlink data and a scheduling request transmission status based on the transmission resource and the uplink control information.

Specifically, if downlink data is received by the terminal device, the terminal device determines that the receiving status of downlink data is not DTX. The terminal device determines that the SR transmission status is positive SR transmission. In this case, the terminal device determines that the transmission resource is the PUCCH resource allocated to the SR. The uplink control information includes the 1-bit or 2-bit HARQ-ACK information and the at least 2-bit SR transmission status indication information. To be specific, the terminal device sends the uplink control information based on a PUCCH format P.

If the terminal device determines that the SR transmission status is negative SR transmission, in this case, the terminal device determines that the transmission resource is a PUCCH resource allocated to the HARQ-ACK information. The terminal device sends the uplink control information based on a PUCCH format Ya or Yb.

It should be noted that this method is independent of the control information transmission method 100.

According to the control information transmission method in this embodiment of this application, a problem about how to transmit an SR and how to simultaneously transmit an SR and HARQ-ACK information after a quantity of PUCCH symbols is reduced to 1, 2, or 3 symbols is effectively resolved.

The foregoing describes in detail the control information transmission method 100 according to the embodiments of this application with reference to FIG. 2. The following describes in detail a terminal device and a network device according to the embodiments of this application with reference to FIG. 3 to FIG. 6. It should be noted that the terminal device and the network device can perform the methods in the foregoing embodiments. Therefore, for specific details, refer to the descriptions in the foregoing embodiments. For brevity, details are not described herein again.

FIG. 3 is a schematic block diagram of a terminal device 200 according to an embodiment of this application. As shown in FIG. 3, the terminal device 200 includes:
a processing module 210, configured to determine a transmission resource based on a receiving status of downlink data and a scheduling request transmission status, where the transmission resource is one of N first resources or one of M second resources, the N first resources are corresponding to N receiving statuses of the downlink data, the M second resources are used to transmit a scheduling request, N is a positive integer greater than 1, and M is a positive integer; and
a transceiver module 220, configured to send uplink control information on the transmission resource. Optionally, the transceiver module 220 is further configured to receive the downlink data.

After the transceiver module 220 receives the downlink data, the processing module 210 needs to determine the downlink data receiving status. For example, the downlink data is data carried on a PDSCH. The downlink data may be sent by a network device.

It should be noted that, for descriptions of the downlink data, the downlink data receiving status, the N first resources, the M second resources, and the like, reference may be specifically made to the descriptions in the control information transmission method 100. For brevity, details are not described herein again.

Optionally, the transceiver module 220 is further configured to:
receive first resource indication information, where the first resource indication information indicates the N first resources. Optionally, the transceiver module 220 is further configured to:
receive second resource indication information, where the second resource indication information indicates the M second resources.

It should be noted that, for descriptions of the first resource indication information and the second resource indication information, reference may be specifically made to the descriptions in the control information transmission method 100. For brevity, details are not described herein again.

In this embodiment of this application, after determining the receiving status of downlink data and the SR transmission status, the terminal device determines the transmission resource based on the receiving status of downlink data and the SR transmission status.

Optionally, N is 2 or 4, and the processing module 210 is specifically configured to:
if the scheduling request transmission status is positive scheduling request transmission, determine that the transmission resource is one of the M second resources, where
the uplink control information indicates one of the N data receiving statuses and the positive scheduling request transmission.

Optionally, M is 1, and the processing module 210 is specifically configured to:
if the receiving status of downlink data is one of the two receiving statuses of the downlink data, or the receiving status of downlink data is one of the four receiving statuses of the downlink data, and the scheduling request transmission status is the positive scheduling request transmission, determine that the transmission resource is the one second resource, where
the uplink control information indicates NACK and the positive SR transmission, or the uplink control information indicates (NACK, NACK) and the positive SR transmission, or the uplink control information indicates NACK/DTX and the positive SR transmission, or the uplink control information indicates (NACK, NACK)/(DTX, DTX) and the positive SR transmission.

According to the terminal device in this embodiment of this application, because only one PUCCH resource is allocated to the SR, when SR collision occurs, if the SR resource needs to be used to indicate a downlink data status, only one of ACK and the NACK can be selected. Considering that the NACK is more important than the ACK, a priority of the ACK is lower. To be specific, when the ACK collides with the positive SR transmission, the ACK is discarded and not indicated, and the network device treats the ACK as the NACK; however, when the NACK collides with the positive SR transmission, both the NACK and the positive SR transmission are indicated. According to the terminal device, SR transmission is ensured, and an increase in an uplink resource request latency is avoided. An only disadvantage is that ACK transmission is delayed, and a downlink data latency may be affected.

Optionally, M is 1, and the processing module 210 is specifically configured to:
if the receiving status of downlink data is one of the two receiving statuses of the downlink data, or the receiving status of downlink data is one of the four receiving statuses of the downlink data, and the scheduling request transmission status is the positive scheduling request transmission, determine that the transmission resource is the one second resource, where
the uplink control information indicates the positive scheduling request transmission and the downlink data receiving status, and the transceiver module is specifically configured to:
   send, on the one second resource, a PUCCH used to carry 1-bit or 2-bit information, and a demodulation reference signal used to demodulate the PUCCH, where the 1-bit or 2-bit information indicates the downlink data receiving status.

It should be understood that the transceiver module 220 sends the uplink control information on the transmission resource based on a PUCCH format Ya or Yb.

According to the terminal device in this embodiment of this application, performance of the PUCCH format Ya or Yb is poorer than that of a PUCCH format X. However, according to the terminal device, to make an SR, the ACK, and the NACK have a same priority, when HARQ-ACK information collides with an SR, the HARQ-ACK information and the SR are sent by using the PUCCH format Ya, to be specific, when collision occurs, no status is discarded. Optionally, N is 2, M is 2, the two second resources include a first second-resource and a second second-resource, and the processing module 210 is specifically configured to:
if the receiving status of the downlink data is the ACK and the scheduling request transmission status is the positive scheduling request transmission, determine that the transmission resource is the first second-resource, where the uplink control information indicates the positive scheduling request transmission and the ACK; or
if the receiving status of the downlink data is the NACK and the scheduling request transmission status is the positive scheduling request transmission, determine that the transmission resource is the second second-resource, where the uplink control information indicates the positive scheduling request transmission and the NACK.

The two second resources include the first second-resource and the second second-resource. It should be understood that there is no order between the first second-resource and the second second-resource, and the first second-resource and the second second-resource are merely used to identify one of the two second resources.

It should be understood that there is only one positive SR transmission status, and the transceiver module 220 sends the uplink control information on the transmission resource based on a PUCCH format M.

According to the terminal device in this embodiment of this application, HARQ-ACK information and an SR have a same priority. Therefore, when HARQ-ACK information collides with an SR, both the HARQ-ACK information and the SR can be indicated. An only disadvantage is that, although there is only one positive SR transmission status, two SR resources need to be reserved, and PUCCH overheads are relatively large.

Optionally, N is 2, and the transceiver module 220 is further configured to receive the downlink data, where the downlink data includes two transport blocks TBs; and
the processing module 210 is further configured to determine that the receiving status of the downlink data is a spatial bundling result of receiving statuses respectively corresponding to the two TBs.

Optionally, the processing module 210 is specifically configured to:
if the receiving status of downlink data is one of the two receiving statuses of the downlink data, or the receiving status of downlink data is one of the four receiving statuses of the downlink data, and the scheduling request transmission status is negative scheduling request transmission, determine that the transmission resource is one of the N first resources. Optionally, N is 2, M is 1, the two receiving statuses of the downlink data include positive acknowledgement ACK and negative acknowledgement NACK, and the processing module 210 is specifically configured to:
if the receiving status of the downlink data is the ACK and the scheduling request transmission status is the positive scheduling request transmission, determine that the transmission resource is the one second resource, where the uplink control information indicates the ACK and the positive scheduling request transmission; or
if the receiving status of the downlink data is the NACK and the scheduling request transmission status is the positive scheduling request transmission, determine that the transmission resource is a first resource corresponding to the NACK, where the uplink control information indicates the NACK and negative scheduling request transmission.

According to the terminal device in this embodiment of this application, a priority of an SR is lower than that of the NACK. However, considering that an occurrence probability of the NACK is relatively low, impact on an SR latency is relatively small. When the receiving status of downlink data is DTX and the SR transmission status is the positive SR transmission, the terminal device also transmits the uplink control information on a resource allocated to an SR. Therefore, when the network device sends downlink data but the terminal device considers a receiving status of downlink data as DTX, and the network device receives the uplink control information transmitted on the resource allocated to the SR and considers a receiving status of downlink data as ACK, a problem occurs. Therefore, reliability is relatively poor.

Optionally, N is 2, M is 1, the two receiving statuses of the downlink data include positive acknowledgement ACK and negative acknowledgement NACK, and the processing module 210 is specifically configured to:
if the receiving status of the downlink data is the ACK and the scheduling request transmission status is the positive scheduling request transmission, determine that the transmission resource is a first resource corresponding to the ACK, where the uplink control information indicates the ACK and negative scheduling request transmission; or
if the receiving status of the downlink data is the NACK and the scheduling request transmission status is the positive scheduling request transmission, determine, by the terminal device, that the transmission resource is the one second resource, where the uplink control information indicates the NACK and the positive scheduling request transmission.

According to the terminal device in this embodiment of this application, mis-identification between DTX and ACK according to the foregoing terminal device is avoided, and receiving performance is robust. However, a priority of an SR is lower than that of the ACK. Considering that an occurrence probability of the ACK is relatively high, impact on an SR latency may be relatively large.

Optionally, N is 2, M is 2, the two receiving statuses of the downlink data include positive acknowledgement ACK and negative acknowledgement NACK, the scheduling request includes a first scheduling request and a second scheduling request, the two second resources include a second resource corresponding to the first scheduling request and a scheduling resource corresponding to the second scheduling request, and the processing module 210 is specifically configured to:
if the receiving status of the downlink data is the ACK or the NACK and the scheduling request transmission status is first positive scheduling request transmission, determine that the transmission resource is the second resource corresponding to transmission of the first scheduling request, where the uplink control information indicates NACK/DTX and the first positive scheduling request transmission; or
if the receiving status of the downlink data is the ACK or the NACK and the scheduling request transmission status is second positive scheduling request transmission, determine that the transmission resource is the second resource corresponding to transmission of the second scheduling request, where the uplink control information indicates NACK/DTX and the second positive scheduling request transmission.

According to the terminal device in this embodiment of this application, if an SR resource needs to be used to indicate a downlink data status, only one of the ACK and the NACK can be selected. Considering that the NACK is more important than the ACK, a priority of the ACK is lower. According to the terminal device, SR transmission is ensured, and an increase in an uplink resource request latency is avoided. An only disadvantage is that ACK transmission is delayed, and a downlink data latency may be affected.

Optionally, N is 2, M is 2, the two receiving statuses of the downlink data include positive acknowledgement ACK and negative acknowledgement NACK, the scheduling request includes a first scheduling request and a second scheduling request, the two second resources include a second resource corresponding to the first scheduling request and a scheduling resource corresponding to the second scheduling request, and the processing module 210 is specifically configured to:
if the receiving status of the downlink data is the ACK and the scheduling request transmission status is first positive scheduling request transmission or second positive scheduling request transmission, determine that the transmission resource is the second resource corresponding to transmission of the first scheduling request or the second resource corresponding to transmission of the second scheduling request, where the uplink control information indicates the ACK and the first positive scheduling request transmission or the second positive scheduling request transmission; or
if the receiving status of the downlink data is the NACK and the scheduling request transmission status is first positive scheduling request transmission or second positive scheduling request transmission, determine that the transmission resource is a first resource corresponding to the NACK, where the uplink control information indicates the NACK and negative scheduling request transmission.

According to the terminal device in this embodiment of this application, a priority of an SR is lower than that of the NACK. However, considering that an occurrence probability of the NACK is relatively low, impact on an SR latency is relatively small.

Optionally, N is 2, M is 2, the two receiving statuses of the downlink data include positive acknowledgement ACK and negative acknowledgement NACK, the scheduling request includes a first scheduling request and a second scheduling request, the two second resources include a second resource corresponding to the first scheduling request and a scheduling resource corresponding to the second scheduling request, and the processing module 210 is specifically configured to:
if the receiving status of the downlink data is the ACK and the scheduling request transmission status is first positive scheduling request transmission or second positive scheduling request transmission, determine that the transmission resource is a first resource corresponding to the ACK, where the uplink control information indicates the ACK and negative scheduling request transmission; or
if the receiving status of the downlink data is the NACK and the scheduling request transmission status is first positive scheduling request transmission or second positive scheduling request transmission, determine that the transmission resource is the second resource corresponding to transmission of the first scheduling request or the second resource corresponding to transmission of the second scheduling request, where the uplink control information indicates the NACK and the first positive scheduling request transmission or the second positive scheduling request transmission.

According to the terminal device in this embodiment of this application, mis-identification between DTX and ACK is avoided, and receiving performance is robust. However, a priority of an SR is lower than that of the ACK. Considering that an occurrence probability of the ACK is relatively high, impact on an SR latency may be relatively large.

Optionally, N is 2 or 4, M is 1, the two receiving statuses of the downlink data include positive acknowledgement ACK and negative acknowledgement NACK, or the four receiving statuses of the downlink data include (ACK, ACK), (NACK, NACK), (ACK, NACK), and (NACK, ACK), and the processing module 210 is specifically configured to:
if the receiving status of downlink data is one of the two receiving statuses of the downlink data, or the receiving status of downlink data is one of the four receiving statuses of the downlink data, and the scheduling request transmission status is one of at least two types of positive SR transmission, determine that the transmission resource is the one second resource, where
the uplink control information indicates the positive scheduling request transmission and the downlink data receiving status, and the transceiver module 220 is specifically configured to: send, on the one second resource, a PUCCH used to carry n-bit information, and a demodulation reference signal used to demodulate the PUCCH, where the n-bit information indicates the receiving status of downlink data and the SR transmission status.

It should be understood that there are at least two positive SR transmission statuses, and the transceiver module 220 sends the uplink control information on the transmission resource based on a PUCCH format P.

According to the terminal device in this embodiment of this application, an SR and HARQ-ACK information are equally important, namely, have a same priority.

Optionally, the first resource is identified by at least one of a cyclic shift, an orthogonal sequence, and a resource block; and/or
the second resource is identified by at least one of a cyclic shift, an orthogonal sequence, and a resource block.

Optionally, the transceiver module 220 is further configured to receive signaling, where the signaling instructs to determine the transmission resource by using one of the foregoing control information transmission solutions and send the uplink control information on the transmission resource.

Optionally, the signaling is higher layer signaling.

According to the terminal device for control information transmission in this embodiment of this application, a problem about how to transmit an SR and how to simultaneously transmit an SR and HARQ-ACK information after a quantity of PUCCH symbols is reduced to 1, 2, or 3 symbols is effectively resolved.

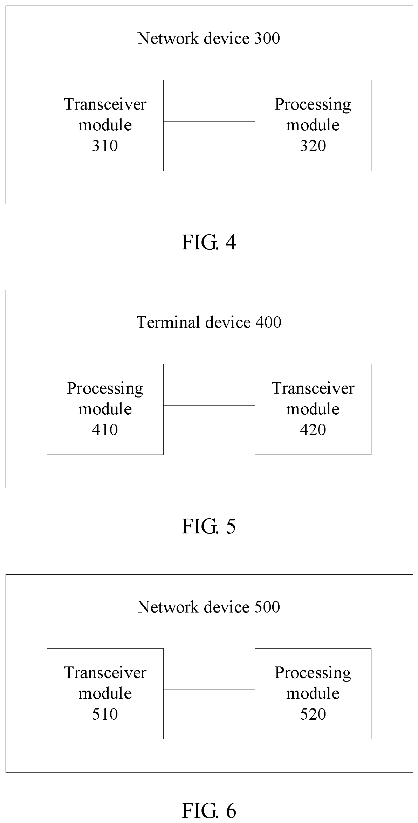

FIG. 4 is a schematic block diagram of a network device 300 according to an embodiment of this application. As shown in FIG. 4, the network device 300 includes:
a transceiver module 310, configured to receive uplink control information on a transmission resource, where the transmission resource is one of N first resources or one of M second resources, the N first resources are corresponding to N receiving statuses of the downlink data, the M second resources are used to transmit a scheduling request, N is a positive integer greater than 1, and M is a positive integer; and
a processing module 320, configured to determine a receiving status of downlink data and a scheduling request transmission status based on the transmission resource and the uplink control information.

Optionally, the transceiver module 310 is further configured to send the downlink data.

Optionally, N is 2 or 4, the two receiving statuses of the downlink data include positive acknowledgement ACK and negative acknowledgement NACK, or the four receiving statuses of the downlink data include (ACK, ACK), (NACK, NACK), (ACK, NACK), and (NACK, ACK), and the processing module 320 is specifically configured to determine that the transmission resource is one of the M second resources;
the transceiver module 310 is specifically configured to receive the uplink control information on the one of the M second resources; and
the processing module 320 is specifically configured to determine, based on the one of the M second resources and the uplink control information, that the receiving status of downlink data is one of the N data receiving statuses and the scheduling request transmission status is positive scheduling request transmission.

Optionally, M is 1, the transmission resource is the one second resource, and the processing module 320 is specifically configured to: determine, based on the one second resource, that the receiving status of downlink data is NACK or (NACK, NACK) and the scheduling request transmission status is the positive SR transmission; or determine, based on the one second resource, that the receiving status of downlink data is NACK/DTX or (NACK, NACK)/(DTX, DTX) and the scheduling request transmission status is the positive SR transmission. According to the network device in this embodiment of this application, because only one PUCCH resource is allocated to an SR, when SR collision occurs, if the SR resource needs to be used to indicate a downlink data status, only one of ACK and the NACK can be selected. Considering that the NACK is more important than the ACK, a priority of the ACK is lower. To be specific, when the ACK collides with the positive SR transmission, the ACK is discarded and not indicated, and the network device treats the ACK as the NACK; however, when the NACK collides with the positive SR transmission, both the NACK and the positive SR transmission are indicated. According to the network device, SR transmission is ensured, and an increase in an uplink resource request latency is avoided. An only disadvantage is that ACK transmission is delayed, and a downlink data latency may be affected.

Optionally, M is 1, the transmission resource is the one second resource, and the transceiver module 310 is specifically configured to receive, on the one second resource, a PUCCH used to carry 1-bit or 2-bit information, and a demodulation reference signal used to demodulate the PUCCH, where the 1-bit or 2-bit information indicates the downlink data receiving status; and
the processing module 320 is specifically configured to: determine, based on the one second resource, that the scheduling request transmission status is the positive scheduling request transmission, and determine, based on the 1-bit or 2-bit information, that the receiving status of downlink data is one of the two receiving statuses of the downlink data or one of the four receiving statuses of the downlink data.

According to the network device in this embodiment of this application, performance of a PUCCH format Ya or Yb is poorer than that of a PUCCH format X. However, according to the network device, to make an SR, the ACK, and the NACK have a same priority, when HARQ-ACK information collides with an SR, the HARQ-ACK information and the SR are sent by using the PUCCH format Ya, to be specific, when collision occurs, no status is discarded. Optionally, N is 2, M is 2, the two second resources include a first second-resource and a second second-resource, and the transmission resource is the first second-resource and the second second-resource; and
the processing module 320 is specifically configured to: determine, based on the first second-resource, that the receiving status of the downlink data is the ACK and the scheduling request transmission status is the positive scheduling request transmission; or
determine, based on the second second-resource, that the receiving status of the downlink data is the NACK and the scheduling request transmission status is the positive scheduling request transmission.

According to the network device in this embodiment of this application, HARQ-ACK information and an SR have a same priority. Therefore, when HARQ-ACK information collides with an SR, both the HARQ-ACK information and the SR can be indicated. An only disadvantage is that, although there is only one positive SR transmission status, two SR resources need to be reserved, and PUCCH overheads are relatively large.

Optionally, N is 2, and the transceiver module 310 is specifically configured to send the downlink data, where the downlink data includes two transport blocks TBs; and
the receiving status of the downlink data is a spatial bundling result of receiving statuses respectively corresponding to the two TBs.

Optionally, N is 2 or 4, and the processing module 320 is specifically configured to determine that the transmission resource is one of the N first resources;
the transceiver module 310 is specifically configured to receive the uplink control information on the one of the N first resources; and
the processing module 320 is specifically configured to determine, based on the one of the N first resources, that the receiving status of downlink data is one of the two or four receiving statuses of the downlink data and the scheduling request transmission status is negative scheduling request transmission.

Optionally, N is 2, M is 1, the two receiving statuses of the downlink data include positive acknowledgement ACK and negative acknowledgement NACK, the transmission resource is the one second resource, and the processing module 320 is specifically configured to determine that the transmission resource is the one second resource;
the transceiver module 310 is specifically configured to receive the uplink control information on the one second resource, where
the processing module 320 is specifically configured to determine, based on the one second resource, that the receiving status of the downlink data is the ACK and the scheduling request transmission status is the positive scheduling request transmission; or
the processing module 320 is specifically configured to determine that the transmission resource is a first resource corresponding to the NACK; and
the transceiver module 310 is specifically configured to receive the uplink control information on the first resource corresponding to the NACK, where
the processing module 320 is specifically configured to determine, based on the first resource corresponding to the NACK, that the receiving status of the downlink data is the NACK and the scheduling request transmission status is negative scheduling request transmission.

According to the network device in this embodiment of this application, a priority of an SR is lower than that of the NACK. However, considering that an occurrence probability of the NACK is relatively low, impact on an SR latency is relatively small. When the receiving status of downlink data is DTX and the SR transmission status is the positive SR transmission, a terminal device also transmits the uplink control information on a resource allocated to an SR. Therefore, when the network device sends downlink data but the terminal device considers a receiving status of downlink data as DTX, and the network device receives the uplink control information transmitted on the resource allocated to the SR and considers a receiving status of downlink data as ACK, a problem occurs. Therefore, reliability is relatively poor.

Optionally, N is 2, M is 1, the two receiving statuses of the downlink data include positive acknowledgement ACK and negative acknowledgement NACK, and the processing module 320 is specifically configured to determine, by the network device, that the transmission resource is a first resource corresponding to the ACK;
the transceiver module 310 is specifically configured to receive the uplink control information on the first resource corresponding to the ACK, where
the processing module 320 is specifically configured to determine, based on the first resource corresponding to the ACK, that the receiving status of the downlink data is the ACK and the scheduling request transmission status is negative scheduling request transmission; or
the processing module 320 is specifically configured to determine that the transmission resource is the one second resource; and
the transceiver module 310 is specifically configured to receive the uplink control information on the one second resource, where
the processing module 320 is specifically configured to determine, based on the one second resource, that the receiving status of the downlink data is the NACK and the scheduling request transmission status is the positive scheduling request transmission.

According to the network device in this embodiment of this application, mis-identification between DTX and ACK is avoided, and receiving performance is robust. However, a priority of an SR is lower than that of the ACK. Considering that an occurrence probability of the ACK is relatively high, impact on an SR latency may be relatively large.

Optionally, N is 2, M is 2, the two receiving statuses of the downlink data include positive acknowledgement ACK and negative acknowledgement NACK, the scheduling request includes a first scheduling request and a second scheduling request, the two second resources include a second resource corresponding to the first scheduling request and a scheduling resource corresponding to the second scheduling request, and the processing module 320 is specifically configured to determine that the transmission resource is the second resource corresponding to transmission of the first scheduling request;
the transceiver module 310 is specifically configured to receive the uplink control information on the second resource corresponding to transmission of the first scheduling request, where
the processing module 320 is specifically configured to determine, based on the second resource corresponding to transmission of the first scheduling request, that the receiving status of the downlink data is the NACK and the scheduling request transmission status is first positive scheduling request transmission; or
the processing module 320 is specifically configured to determine that the transmission resource is the second resource corresponding to transmission of the second scheduling request; and
the transceiver module 310 is specifically configured to receive the uplink control information on the second resource corresponding to transmission of the second scheduling request, where
the processing module 320 is specifically configured to determine, based on the second resource corresponding to transmission of the second scheduling request, that the receiving status of the downlink data is the NACK and the scheduling request transmission status is second positive scheduling request transmission.

According to the network device in this embodiment of this application, if an SR resource needs to be used to indicate a downlink data status, only one of the ACK and the NACK can be selected. Considering that the NACK is more important than the ACK, a priority of the ACK is lower. According to the network device, SR transmission is ensured, and an increase in an uplink resource request latency is avoided. An only disadvantage is that ACK transmission is delayed, and a downlink data latency may be affected.

Optionally, N is 2, M is 2, the two receiving statuses of the downlink data include positive acknowledgement ACK and negative acknowledgement NACK, the scheduling request includes a first scheduling request and a second scheduling request, the two second resources include a second resource corresponding to the first scheduling request and a scheduling resource corresponding to the second scheduling request, and the processing module 320 is specifically configured to determine that the transmission resource is the second resource corresponding to transmission of the first scheduling request or the second resource corresponding to transmission of the second scheduling request;
the transceiver module 310 is specifically configured to receive the uplink control information on the second resource corresponding to transmission of the first scheduling request or the second resource corresponding to transmission of the second scheduling request, where
the processing module 320 is specifically configured to determine, based on the second resource corresponding to transmission of the first scheduling request or the second resource corresponding to transmission of the second scheduling request, that the receiving status of the downlink data is the ACK and the scheduling request transmission status is first positive scheduling request transmission or second positive scheduling request transmission; or
the processing module 320 is specifically configured to determine that the transmission resource is a first resource corresponding to the NACK; and
the transceiver module 310 is specifically configured to receive the uplink control information on the first resource corresponding to the NACK, where
the processing module 320 is specifically configured to determine, based on the first resource corresponding to the NACK, that the receiving status of the downlink data is the NACK and the scheduling request transmission status is negative scheduling request transmission.

According to the network device in this embodiment of this application, a priority of an SR is lower than that of the NACK. However, considering that an occurrence probability of the NACK is relatively low, impact on an SR latency is relatively small.

Optionally, N is 2, M is 2, the two receiving statuses of the downlink data include positive acknowledgement ACK and negative acknowledgement NACK, the scheduling request includes a first scheduling request and a second scheduling request, the two second resources include a second resource corresponding to the first scheduling request and a scheduling resource corresponding to the second scheduling request, and the processing module 320 is specifically configured to determine that the transmission resource is a first resource corresponding to the ACK;
the transceiver module 310 is specifically configured to receive the uplink control information on the first resource corresponding to the ACK, where
the processing module 320 is specifically configured to determine, based on the first resource corresponding to the ACK, that the receiving status of the downlink data is the ACK and the scheduling request transmission status is negative scheduling request transmission; or
the processing module 320 is specifically configured to determine that the transmission resource is the second resource corresponding to transmission of the first scheduling request or the second resource corresponding to transmission of the second scheduling request; and
the transceiver module 310 is specifically configured to receive the uplink control information on the second resource corresponding to transmission of the first scheduling request or the second resource corresponding to transmission of the second scheduling request, where
the processing module 320 is further configured to determine, based on the second resource corresponding to transmission of the first scheduling request or the second resource corresponding to transmission of the second scheduling request, that the receiving status of the downlink data is the NACK and the scheduling request transmission status is first positive scheduling request transmission or second positive scheduling request transmission.

According to the network device in this embodiment of this application, mis-identification between DTX and ACK is avoided, and receiving performance is robust. However, a priority of an SR is lower than that of the ACK. Considering that an occurrence probability of the ACK is relatively high, impact on an SR latency may be relatively large.

Optionally, N is 2 or 4, M is 1, the two receiving statuses of the downlink data include positive acknowledgement ACK and negative acknowledgement NACK, or the four receiving statuses of the downlink data include (ACK, ACK), (NACK, NACK), (ACK, NACK), and (NACK, ACK), the transmission resource is the one second resource, and the transceiver module 310 is specifically configured to receive, on the one second resource, a PUCCH used to carry n-bit information, and a demodulation reference signal used to demodulate the PUCCH, where the n-bit information indicates the receiving status of downlink data and the SR transmission status; and
the processing module 320 is specifically configured to determine, based on the PUCCH resource allocated to the SR and the n-bit information, that the receiving status of downlink data is one of the two receiving statuses of the downlink data or one of the four receiving statuses of the downlink data, and the SR transmission status is one of at least two types of positive SR transmission.

According to the network device in this embodiment of this application, an SR and HARQ-ACK information are equally important, namely, have a same priority.

Optionally, the first resource is identified by at least one of a cyclic shift, an orthogonal sequence, and a resource block; and/or the second resource is identified by at least one of a cyclic shift, an orthogonal sequence, and a resource block.

Optionally, the transceiver module 310 is further configured to send signaling, where the signaling instructs the terminal device to determine the transmission resource by using one of the foregoing control information transmission solutions and send the uplink control information on the transmission resource.

Optionally, the signaling is higher layer signaling. The higher layer signaling (Higher Layer Signaling) is relative to physical layer signaling, is signaling coming from a higher layer (layer) and having a lower transmit frequency, and includes radio resource control (RRC, Radio Resource Control) signaling and Media Access Control (MAC, Media Access Control) signaling.

According to the network device for control information transmission in this embodiment of this application, a problem about how to transmit an SR and how to simultaneously transmit an SR and HARQ-ACK information after a quantity of PUCCH symbols is reduced to 1, 2, or 3 symbols is effectively resolved.

FIG. 5 is a schematic block diagram of a terminal device 400 according to an embodiment of this application. As shown in FIG. 5, the terminal device 400 includes:
a processing module 410, configured to determine that a transmission resource is a PUCCH resource allocated to an SR; and
a transceiver module 420, configured to send uplink control information on the transmission resource, where the uplink control information includes 1-bit or 2-bit HARQ-ACK information and at least 2-bit SR transmission status indication information.

Specifically, if downlink data is received by the transceiver module 420, the processing module 410 determines that a receiving status of downlink data is not DTX. The processing module 410 determines that an SR transmission status is positive SR transmission. In this case, the processing module 410 determines that the transmission resource is the PUCCH resource allocated to an SR. The uplink control information includes the 1-bit or 2-bit HARQ-ACK information and the at least 2-bit SR transmission status indication information. To be specific, the transceiver module 420 sends the uplink control information based on a PUCCH format P. According to the terminal device in this embodiment of this application, a problem about how to transmit an SR and how to simultaneously transmit an SR and HARQ-ACK information after a quantity of PUCCH symbols is reduced to 1, 2, or 3 symbols is effectively resolved.

FIG. 6 is a schematic block diagram of a network device 500 according to an embodiment of this application. As shown in FIG. 6, the network device 500 includes:
a transceiver module 510, configured to receive uplink control information on a PUCCH resource allocated to an SR; and
a processing module 520, configured to determine a receiving status of downlink data and a scheduling request transmission status based on the transmission resource and the uplink control information.

Specifically, the processing module 520 is specifically configured to determine that the transmission resource is the PUCCH resource allocated to an SR; the transceiver module 510 is specifically configured to receive, on the PUCCH resource allocated to an SR, at least 2-bit SR transmission status indication information and HARQ-ACK information that includes 1-bit or 2-bit information; the processing module 520 determines, based on the PUCCH resource allocated to an SR, the HARQ-ACK information that includes 1-bit or 2-bit information, and the at least 2-bit SR transmission status indication information, that the receiving status of downlink data is one of two receiving statuses of the downlink data or one of four receiving statuses of the downlink data, and the SR transmission status is one of at least two types of positive SR transmission.

According to the network device for control information transmission in this embodiment of this application, a problem about how to transmit an SR and how to simultaneously transmit an SR and HARQ-ACK information after a quantity of PUCCH symbols is reduced to 1, 2, or 3 symbols is effectively resolved.

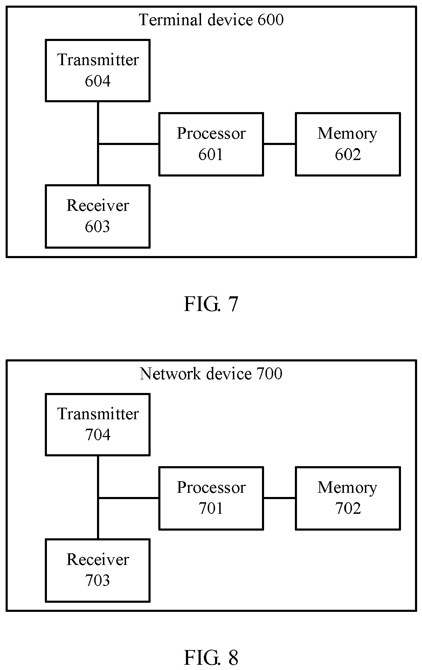

FIG. 7 is a schematic structural diagram of a terminal device 600 according to an embodiment of this application. As shown in FIG. 7, the terminal device 600 includes a processor 601, a memory 602, a receiver 603, and a transmitter 604. These components are in a communications connection. The memory 602 is configured to store an instruction. The processor 601 is configured to: execute the instruction stored in the memory 602, control the receiver 603 to receive information, and control the transmitter 604 to send information.

The processor 601 is configured to execute the instruction stored in the memory 602. The processor 601 may be configured to perform operations and/or functions corresponding to the processing module 210 in the terminal device 200. The receiver 603 and the transmitter 604 may be configured to perform operations and/or functions corresponding to the transceiver module 220 in the terminal device 200. For brevity, details are not described herein again.

FIG. 8 is a schematic structural diagram of a network device 700 according to an embodiment of this application. As shown in FIG. 8, the network device 700 includes a processor 701, a memory 702, a receiver 703, and a transmitter 704. These components are in a communications connection. The memory 702 is configured to store an instruction. The processor 701 is configured to: execute the instruction stored in the memory 702, control the receiver 703 to receive information, and control the transmitter 704 to send information.

The processor 701 is configured to execute the instruction stored in the memory 702. The processor 701 may be configured to perform operations and/or functions corresponding to the processing module 320 in the network device 300. The receiver 703 and the transmitter 704 may be configured to perform operations and/or functions corresponding to the transceiver module 310 in the network device 300. For brevity, details are not described herein again.

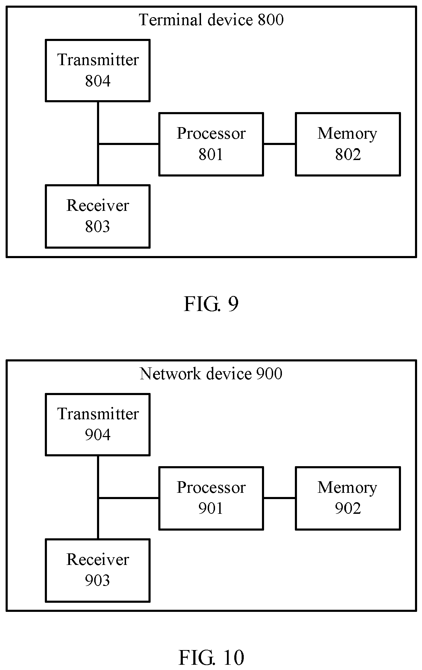

FIG. 9 is a schematic structural diagram of a terminal device 800 according to an embodiment of this application. As shown in FIG. 9, the terminal device 800 includes a processor 801, a memory 802, a receiver 803, and a transmitter 804. These components are in a communications connection. The memory 802 is configured to store an instruction. The processor 801 is configured to: execute the instruction stored in the memory 802, control the receiver 803 to receive information, and control the transmitter 804 to send information.

The processor 801 is configured to execute the instruction stored in the memory 802. The processor 801 may be configured to perform operations and/or functions corresponding to the processing module 410 in the terminal device 400. The receiver 803 and the transmitter 804 may be configured to perform operations and/or functions corresponding to the transceiver module 420 in the terminal device 400. For brevity, details are not described herein again.

FIG. 10 is a schematic structural diagram of a network device 900 according to an embodiment of this application. As shown in FIG. 10, the network device 900 includes a processor 901, a memory 902, a receiver 903, and a transmitter 904. These components are in a communications connection. The memory 902 is configured to store an instruction. The processor 901 is configured to: execute the instruction stored in the memory 902, control the receiver 903 to receive information, and control the transmitter 904 to send information.

The processor 901 is configured to execute the instruction stored in the memory 902. The processor 901 may be configured to perform operations and/or functions corresponding to the processing module 520 in the network device 500. The receiver 903 and the transmitter 904 may be configured to perform operations and/or functions corresponding to the transceiver module 510 in the network device 500. For brevity, details are not described herein again.

An embodiment of this application further provides a communications system. The communications system includes the terminal device and the network device according to the foregoing aspects.

An embodiment of this application further provides a computer program product. When the computer program product runs on a computer, the computer is enabled to perform the foregoing control information transmission method.

It should be understood that the computer program product may be software, or may be another type of computer program product. This application is not limited thereto.

In the embodiments of this application, it should be noted that the foregoing method embodiments of the embodiments of this application may be applied to a processor, or may be implemented by a processor. The processor may be an integrated circuit chip and has a signal processing capability. In an implementation process, steps in the foregoing method embodiments can be implemented by using a hardware integrated logic circuit in the processor, or by using instructions in a form of software. The processor may be a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and the logical block diagrams that are disclosed in the embodiments of this application. The general purpose processor may be a microprocessor, or the processor may be any conventional processor or the like. Steps of the methods disclosed with reference to the embodiments of this application may be directly performed and completed by using a hardware decoding processor, or may be performed and completed by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and performs the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By using an example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus dynamic random access memory (Direct Rambus RAM, DR RAM). It should be noted that the memory of the systems and methods described in this specification includes but is not limited to these and any memory of another proper type.

The execution sequences of the processes should be determined based on functions and internal logic of the processes, and should not be construed as any limitation on the implementation processes of the embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that in the embodiments of this application, "B corresponding to A" indicates that B is associated with A, and B may be determined based on A. However, it should further be understood that determining B based on A does not mean that B is determined based on A only, and B may alternatively be determined based on A and/or other information.

All or some of the foregoing embodiments may be implemented by using software, hardware, firmware, or any combination thereof. When software is used to implement the embodiments, all or some of the embodiments may be implemented in a form of a computer program product. The computer program product may include one or more computer instructions. When the computer program instructions are loaded and executed on a computer, all or some of the procedures or functions according to the embodiments of this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, including one or more usable media. The usable medium may be a magnetic medium (for example, a floppy disk, a hard disk, or a magnetic disk), an optical medium (for example, a DVD), a semiconductor medium (for example, a solid state disk Solid State Disk (SSD)), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this invention as defined by the appended claims.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts shown as units may or may not be physical units, may be located in one position, or may be distributed on a plurality of network units. Some or all of the units may be selected depending on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this invention.

Any variation or replacement readily figured out by a person skilled in the art within the technical scope of the appended claims shall fall within the protection scope of this application. Therefore, the protection scope of this application shall be subject to the protection scope of the claims.

## Claims

1. A control information transmission method configured to operate in a 3GPP system, comprising:
receiving (S101), by a terminal device, downlink data and determining, by the terminal device, a receiving status of the downlink data;
determining (S110), by the terminal device, a transmission resource based on the receiving status of the downlink data and a scheduling request transmission status, wherein the transmission resource is one of N first resources or one of M second resources, the N first resources are corresponding to N receiving statuses of the downlink data, the M second resources are used to transmit a scheduling request, N is a positive integer greater than 1, and M is a positive integer; and
sending (S120), by the terminal device, uplink control information on the transmission resource, wherein N is 2 or 4, the two receiving statuses of the downlink data comprise positive acknowledgement, ACK and negative acknowledgement, NACK, or the four receiving statuses of the downlink data comprise (ACK, ACK), (NACK, NACK), (ACK, NACK), and (NACK, ACK), and the determining (S110), by the terminal device, a transmission resource based on the receiving status of the downlink data and a scheduling request transmission status comprises:
when the scheduling request transmission status is positive scheduling request transmission, determining, by the terminal device, that the transmission resource is one of the M second resources, wherein
the uplink control information indicates one of the N receiving statuses of the downlink data and the positive scheduling request transmission, wherein M>1; and
when the scheduling request transmission status is negative scheduling request transmission, determining, by the terminal device, that the transmission resource is one of the N first resources, wherein each of the receiving status of the downlink data has a different corresponding resource in the N first resources.

2. The method according to claim 1, wherein M is 2.

3. The method according to any one of claims 1 or 2, wherein N is 2, M is 2, the two second resources comprise a first second-resource and a second second-resource, and the determining (S110), by the terminal device, a transmission resource based on the receiving status of the downlink data and a scheduling request transmission status comprises:
if the receiving status of the downlink data is the ACK and the scheduling request transmission status is the positive scheduling request transmission, determining, by the terminal device, that the transmission resource is the first second-resource, wherein the uplink control information indicates the positive scheduling request transmission and the ACK; or
if the receiving status of the downlink data is the NACK and the scheduling request transmission status is the positive scheduling request transmission, determining, by the terminal device, that the transmission resource is the second second-resource, wherein the uplink control information indicates the positive scheduling request transmission and the NACK.

4. The method according to any one of claims 1 to 3, wherein N is 2, M is 2, the two first resources comprise a first first-resource and a second first-resource, and the determining (S110), by the terminal device, a transmission resource based on the receiving status of the downlink data and a scheduling request transmission status comprises:
if the receiving status of the downlink data is the ACK and the scheduling request transmission status is the negative scheduling request transmission, determining, by the terminal device, that the transmission resource is the first first-resource, wherein the uplink control information indicates the negative scheduling request transmission and the ACK; or
if the receiving status of the downlink data is the NACK and the scheduling request transmission status is the negative scheduling request transmission, determining, by the terminal device, that the transmission resource is the second first-resource, wherein the uplink control information indicates the positive scheduling request transmission and the NACK.

5. The method according to any one of claims 1 to 4, wherein the first resource is identified by at least one of a cyclic shift, an orthogonal sequence, and a resource block; and/or
the second resource is identified by at least one of a cyclic shift, an orthogonal sequence, and a resource block.

6. A control information transmission method configured to operate in a 3GPP system, comprising:
transmitting (S101), by a network device, downlink data;
receiving (S130), by the network device, uplink control information on a transmission resource, wherein the transmission resource is one of N first resources or one of M second resources, the N first resources are corresponding to N receiving statuses of downlink data, the M second resources are used to transmit a scheduling request, N is a positive integer greater than 1, and M is a positive integer; and
determining (S140), by the network device, a receiving status of the downlink data and a scheduling request transmission status based on the transmission resource and the uplink control information, wherein N is 2 or 4, the two receiving statuses of the downlink data comprise positive acknowledgement, ACK and negative acknowledgement, NACK, or the four receiving statuses of the downlink data comprise (ACK, ACK), (NACK, NACK), (ACK, NACK), and (NACK, ACK), and the receiving (S130), by a network device, uplink control information on a transmission resource comprises:
determining, by the network device, that the transmission resource is one of the M second resources, wherein M>1 or determining, by the network device, that the transmission resource is one of the first N resources;
receiving, by the network device, the uplink control information on the one of the M second resources or on the one of the first N resources, wherein
the determining (S140), by the network device, a receiving status of downlink data and a scheduling request transmission status based on the transmission resource and the uplink control information comprises:
determining, by the network device based on the one of the M second resources and the uplink control information, that the receiving status of the downlink data is one of the N data receiving statuses and the scheduling request transmission status is positive scheduling request transmission or determining, by the network device based on the one of the N first resources and the uplink control information, that the receiving status of the downlink data is one of the N data receiving statuses and the scheduling request transmission status is negative scheduling request transmission, where each of the receiving statuses of the downlink data has a different corresponding resource in the N first resources.

7. The method according to claim 6, wherein M is 2.

8. The method according to any one of claims 6 or 7, wherein N is 2, M is 2, the two second resources comprise a first second-resource and a second second-resource, and the transmission resource is the first second-resource and the second second-resource; and
the determining (S140), by the network device, a receiving status of downlink data and a scheduling request transmission status based on the transmission resource and the uplink control information comprises:
determining, by the network device based on the first second-resource, that the receiving status of the downlink data is the ACK and the scheduling request transmission status is the positive scheduling request transmission; or
determining, by the network device based on the second second-resource, that the receiving status of the downlink data is the NACK and the scheduling request transmission status is the positive scheduling request transmission.

9. The method according to any one of claims 6 to 8, wherein N is 2, M is 2, the two first resources comprise a first first-resource and a second first-resource; and
the determining (S140), by the network device, a receiving status of downlink data and a scheduling request transmission status based on the transmission resource and the uplink control information comprises:
determining, by the network device based on the first first-resource, that the receiving status of the downlink data is the ACK and the scheduling request transmission status is the negative scheduling request transmission; or
determining, by the network device based on the second first -resource, that the receiving status of the downlink data is the NACK and the scheduling request transmission status is the negative scheduling request transmission.

10. The method according to any one of claims 6 to 9, wherein the first resource is identified by at least one of a cyclic shift, an orthogonal sequence, and a resource block; and/or
the second resource is identified by at least one of a cyclic shift, an orthogonal sequence, and a resource block.

11. An apparatus being configured to perform the method according to any one of claims 1 to 10.

12. A computer program comprising instructions which, when the program is executed by a computer, cause the computer to carry out the method according to any one of the claims 1 to 5 or the method according to any one of the claims 6 to 10.

## Patentansprüche

1. Steuerungsinformationsübertragungsverfahren, konfiguriert für den Betrieb in einem 3GPP-System, umfassend:
Empfangen (S101), durch eine Endgerätevorrichtung, von Downlink-Daten und Bestimmen, durch die Endgerätevorrichtung, eines Empfangsstatus der Downlink-Daten;
Bestimmen (S110), durch die Endgerätevorrichtung, einer Übertragungsressource auf Grundlage des Empfangsstatus der Downlink-Daten und eines Übertragungsstatus einer Planungsanforderung, wobei die Übertragungsressource eine von N ersten Ressourcen oder eine von M zweiten Ressourcen ist, die N ersten Ressourcen N Empfangsstatus der Downlink-Daten entsprechen, die M zweiten Ressourcen verwendet werden, um eine Planungsanforderung zu übertragen, N eine positive ganze Zahl größer als 1 ist und M eine positive ganze Zahl ist; und
Senden (S120), durch die Endgerätevorrichtung, von Uplink-Steuerungsinformationen auf der Übertragungsressource, wobei N 2 oder 4 ist, die zwei Empfangsstatus der Downlink-Daten eine positive Bestätigung, ACK, und eine negative Bestätigung, NACK, umfassen oder die vier Empfangsstatus der Downlink-Daten (ACK, ACK), (NACK, NACK), (ACK, NACK) und (NACK, ACK) umfassen und das Bestimmen (S110), durch die Endgerätevorrichtung, einer Übertragungsressource auf Grundlage des Empfangsstatus der Downlink-Daten und eines Übertragungsstatus einer Planungsanforderung umfasst:
wenn der Übertragungsstatus der Planungsanforderung eine positive Planungsanforderungsübertragung ist, Bestimmen, durch die Endgerätevorrichtung, dass die Übertragungsressource eine der M zweiten Ressourcen ist, wobei
die Uplink-Steuerungsinformation einen der N Empfangsstatus der Downlink-Daten und die positive Planungsanforderungsübertragung anzeigen, wobei M>1; und
wenn der Übertragungsstatus der Planungsanforderung eine negative Planungsanforderungsübertragung ist, Bestimmen, durch die Endgerätevorrichtung, dass die Übertragungsressource eine der N ersten Ressourcen ist, wobei jeder der Empfangsstatus der Downlink-Daten eine andere entsprechende Ressource in den N ersten Ressourcen aufweist.

2. Verfahren nach Anspruch 1, wobei M 2 ist.

3. Verfahren nach einem der Ansprüche 1 oder 2, wobei N 2 ist, M 2 ist, die zwei zweiten Ressourcen eine erste zweite Ressource und eine zweite zweite Ressource umfassen und das Bestimmen (S110), durch die Endgerätevorrichtung, einer Übertragungsressource auf Grundlage des Empfangsstatus der Downlink-Daten und eines Übertragungsstatus einer Planungsanforderung umfasst:
wenn der Empfangsstatus der Downlink-Daten die ACK ist und der Übertragungsstatus der Planungsanforderung die positive Planungsanforderungsübertragung ist, Bestimmen, durch die Endgerätevorrichtung, dass die Übertragungsressource die erste zweite Ressource ist, wobei die Uplink-Steuerungsinformationen die positive Planungsanforderungsübertragung und die ACK anzeigen; oder
wenn der Empfangsstatus der Downlink-Daten die NACK ist und der Übertragungsstatus der Planungsanforderung die positive Planungsanforderungsübertragung ist, Bestimmen, durch die Endgerätevorrichtung, dass die Übertragungsressource die zweite zweite Ressource ist, wobei die Uplink-Steuerungsinformationen die positive Planungsanforderungsübertragung und die NACK anzeigen.

4. Verfahren nach einem der Ansprüche 1 bis 3, wobei N 2 ist, M 2 ist, die zwei ersten Ressourcen eine erste erste Ressource und eine zweite erste Ressource umfassen und das Bestimmen (S110), durch die Endgerätevorrichtung, einer Übertragungsressource auf Grundlage des Empfangsstatus der Downlink-Daten und eines Übertragungsstatus einer Planungsanforderung umfasst:
wenn der Empfangsstatus der Downlink-Daten die ACK ist und der Übertragungsstatus der Planungsanforderung die negative Planungsanforderungsübertragung ist, Bestimmen, durch die Endgerätevorrichtung, dass die Übertragungsressource die erste erste Ressource ist, wobei die Uplink-Steuerungsinformationen die negative Planungsanforderungsübertragung und die ACK anzeigen; oder
wenn der Empfangsstatus der Downlink-Daten die NACK ist und der Übertragungsstatus der Planungsanforderung die negative Planungsanforderungsübertragung ist, Bestimmen, durch die Endgerätevorrichtung, dass die Übertragungsressource die zweite erste Ressource ist, wobei die Uplink-Steuerungsinformationen die positive Planungsanforderungsübertragung und die NACK anzeigen.

5. Verfahren nach einem der Ansprüche 1 bis 4, wobei die erste Ressource durch mindestens eines von einer zyklischen Verschiebung, einer orthogonalen Sequenz und einem Ressourcenblock identifiziert wird; und/oder
die zweite Ressource durch mindestens eines von einer zyklischen Verschiebung, einer orthogonalen Sequenz und einem Ressourcenblock identifiziert wird.

6. Steuerungsinformationsübertragungsverfahren, konfiguriert für den Betrieb in einem 3GPP-System, umfassend:
Übertragen (S 101), durch eine Netzwerkvorrichtung, von Downlink-Daten;
Empfangen (S130), durch die Netzwerkvorrichtung, von Uplink-Steuerungsinformationen auf einer Übertragungsressource, wobei die Übertragungsressource eine von N ersten Ressourcen oder eine von M zweiten Ressourcen ist, die N ersten Ressourcen N Empfangsstatus von Downlink-Daten entsprechen, die M zweiten Ressourcen verwendet werden, um eine Planungsanforderung zu übertragen, N eine positive ganze Zahl größer als 1 ist und M eine positive ganze Zahl ist; und
Bestimmen (S 140), durch die Netzwerkvorrichtung, eines Empfangsstatus der Downlink-Daten und eines Übertragungsstatus einer Planungsanforderung auf Grundlage der Übertragungsressource und der Uplink-Steuerungsinformationen, wobei N 2 oder 4 ist, die zwei Empfangsstatus der Downlink-Daten eine positive Bestätigung, ACK, und eine negative Bestätigung, NACK, umfassen oder die vier Empfangsstatus der Downlink-Daten (ACK, ACK), (NACK, NACK), (ACK, NACK) und (NACK, ACK) umfassen und das Empfangen (S130), durch eine Netzwerkvorrichtung, von Uplink-Steuerungsinformationen auf einer Übertragungsressource umfasst:
Bestimmen, durch die Netzwerkvorrichtung, dass die Übertragungsressource eine der M zweiten Ressourcen ist, wobei M>1 oder Bestimmen, durch die Netzwerkvorrichtung, dass die Übertragungsressource eine der ersten N Ressourcen ist;
Empfangen, durch die Netzwerkvorrichtung, der Uplink-Steuerungsinformationen auf der einen der M zweiten Ressourcen oder auf der einen der ersten N Ressourcen, wobei
das Bestimmen (S140), durch die Netzwerkvorrichtung, eines Empfangsstatus von Downlink-Daten und eines Übertragungsstatus einer Planungsanforderung auf Grundlage der Übertragungsressource und den Uplink-Steuerungsinformationen umfasst:
Bestimmen, durch die Netzwerkvorrichtung, auf Grundlage der einen der M zweiten Ressourcen und der Uplink-Steuerungsinformationen, dass der Empfangsstatus der Downlink-Daten einer der N Datenempfangsstatus ist und der Übertragungsstatus der Planungsanforderung eine positive Planungsanforderungsübertragung ist oder Bestimmen, durch die Netzwerkvorrichtung, auf Grundlage der einen der N ersten Ressourcen und den Uplink-Steuerungsinformationen, dass der Empfangsstatus der Downlink-Daten einer der N Datenempfangsstatus ist und der Übertragungsstatus der Planungsanforderung eine negative Planungsanforderungsübertragung ist, wobei jeder der Empfangsstatus der Downlink-Daten eine andere entsprechende Ressource in den N ersten Ressourcen aufweist.

7. Verfahren nach Anspruch 6, wobei M 2 ist.

8. Verfahren nach einem der Ansprüche 6 oder 7, wobei N 2 ist, M 2 ist, die zwei zweiten Ressourcen eine erste zweite Ressource und eine zweite zweite Ressource umfassen und die Übertragungsressource die erste zweite Ressource und die zweite zweite Ressource ist; und
das Bestimmen (S140), durch die Netzwerkvorrichtung, eines Empfangsstatus von Downlink-Daten und eines Übertragungsstatus einer Planungsanforderung auf Grundlage der Übertragungsressource und den Uplink-Steuerungsinformationen umfasst:
Bestimmen, durch die Netzwerkvorrichtung, auf Grundlage der ersten zweiten Ressource, dass der Empfangsstatus der Downlink-Daten die ACK ist und der Übertragungsstatus der Planungsanforderung die positive Planungsanforderungsübertragung ist; oder
Bestimmen, durch die Netzwerkvorrichtung, auf Grundlage der zweiten zweiten Ressource, dass der Empfangsstatus der Downlink-Daten die NACK ist und der Übertragungsstatus der Planungsanforderung die positive Planungsanforderungsübertragung ist.

9. Verfahren nach einem der Ansprüche 6 bis 8, wobei N 2 ist, M 2 ist, die zwei ersten Ressourcen eine erste erste Ressource und eine zweite erste Ressource umfassen; und
das Bestimmen (S140), durch die Netzwerkvorrichtung, eines Empfangsstatus von Downlink-Daten und eines Übertragungsstatus einer Planungsanforderung auf Grundlage der Übertragungsressource und den Uplink-Steuerungsinformationen umfasst:
Bestimmen, durch die Netzwerkvorrichtung, auf Grundlage der ersten ersten Ressource, dass der Empfangsstatus der Downlink-Daten die ACK ist und der Übertragungsstatus der Planungsanforderung die negative Planungsanforderungsübertragung ist; oder
Bestimmen, durch die Netzwerkvorrichtung, auf Grundlage der zweiten ersten Ressource, dass der Empfangsstatus der Downlink-Daten die NACK ist und der Übertragungsstatus der Planungsanforderung die negative Planungsanforderungsübertragung ist.

10. Verfahren nach einem der Ansprüche 6 bis 9, wobei die erste Ressource durch mindestens eines von einer zyklischen Verschiebung, einer orthogonalen Sequenz und einem Ressourcenblock identifiziert wird; und/oder
die zweite Ressource durch mindestens eines von einer zyklischen Verschiebung, einer orthogonale Sequenz und einem Ressourcenblock identifiziert wird.

11. Vorrichtung, die dazu konfiguriert ist, das Verfahren nach einem der Ansprüche 1 bis 10 durchzuführen.

12. Computerprogramm, das Anweisungen umfasst, die, wenn das Programm von einem Computer ausgeführt wird, den Computer veranlassen, das Verfahren nach einem der Ansprüche 1 bis 5 oder das Verfahren nach einem der Ansprüche 6 bis 10 auszuführen.

## Revendications

1. Procédé de transmission d'informations de commande configuré pour fonctionner dans un système 3GPP, comprenant :
la réception (S101), par un dispositif terminal, de données de liaison descendante et la détermination, par le dispositif terminal, d'un statut de réception des données de liaison descendante ;
la détermination (SI 10), par le dispositif terminal, d'une ressource de transmission sur la base du statut de réception des données de liaison descendante et d'un statut de transmission de demande de planification, dans lequel la ressource de transmission est une de N premières ressources ou une de M secondes ressources, les N premières ressources correspondent à N statuts de réception des données de liaison descendante, les M secondes ressources sont utilisées pour transmettre une demande de planification, N est un entier positif supérieur à 1 et M est un entier positif ; et
l'envoi (S120), par le dispositif terminal, d'informations de commande de liaison montante sur la ressource de transmission, dans lequel N est 2 ou 4, les deux statuts de réception des données de liaison descendante comprennent un accusé de réception positif, ACK, et un accusé de réception négatif, NACK, ou les quatre statuts de réception des données de liaison descendante comprennent (ACK, ACK), (NACK, NACK), (ACK, NACK) et (NACK, ACK), et la détermination (S110), par le dispositif terminal, d'une ressource de transmission sur la base du statut de réception des données de liaison descendante et d'un statut de transmission de demande de planification comprend :
lorsque le statut de transmission de demande de planification est une transmission de demande de planification positive, le fait de déterminer, par le biais du dispositif terminal, que la ressource de transmission est une des M secondes ressources, dans lequel
les informations de commande de liaison montante indiquent un des N statuts de réception des données de liaison descendante et la transmission de demande de planification positive, dans lequel M>1 ; et
lorsque le statut de transmission de demande de planification est une transmission de demande de planification négative, le fait de déterminer, par le biais du dispositif terminal, que la ressource de transmission est une des N premières ressources, dans lequel chacun des statuts de réception des données de liaison descendante a une ressource correspondante différente dans les N premières ressources.

2. Procédé selon la revendication 1, dans lequel M est 2.

3. Procédé selon l'une quelconque des revendications 1 ou 2, dans lequel N est 2, M est 2, les deux secondes ressources comprennent une première seconde ressource et une seconde seconde ressource, et la détermination (S110), par le dispositif terminal, d'une ressource de transmission sur la base du statut de réception des données de liaison descendante et d'un statut de transmission de demande de planification comprend :
si le statut de réception des données de liaison descendante est l'ACK et le statut de transmission de demande de planification est la transmission de demande de planification positive, le fait de déterminer, par le biais du dispositif terminal, que la ressource de transmission est la première seconde ressource, dans lequel les informations de commande de liaison montante indiquent la transmission de demande de planification positive et l'ACK ; ou
si le statut de réception des données de liaison descendante est le NACK et le statut de transmission de demande de planification est la transmission de demande de planification positive, le fait de déterminer, par le biais du dispositif terminal, que la ressource de transmission est la seconde seconde ressource, dans lequel les informations de commande de liaison montante indiquent la transmission de demande de planification positive et le NACK.

4. Procédé selon l'une quelconque des revendications 1 à 3, dans lequel N est 2, M est 2, les deux premières ressources comprennent une première première ressource et une seconde première ressource, et la détermination (S110), par le dispositif terminal, d'une ressource de transmission sur la base du statut de réception des données de liaison descendante et d'un statut de transmission de demande de planification comprend :
si le statut de réception des données de liaison descendante est l'ACK et le statut de transmission de demande de planification est la transmission de demande de planification négative, le fait de déterminer, par le biais du dispositif terminal, que la ressource de transmission est la première première ressource, dans lequel les informations de commande de liaison montante indiquent la transmission de demande de planification négative et l'ACK ; ou
si le statut de réception des données de liaison descendante est le NACK et le statut de transmission de demande de planification est la transmission de demande de planification négative, le fait de déterminer, par le biais du dispositif terminal, que la ressource de transmission est la seconde première ressource, dans lequel les informations de commande de liaison montante indiquent la transmission de demande de planification positive et le NACK.

5. Procédé selon l'une quelconque des revendications 1 à 4, dans lequel la première ressource est identifiée par au moins un parmi un décalage cyclique, une séquence orthogonale et un bloc de ressources ; et/ou
la seconde ressource est identifiée par au moins un parmi un décalage cyclique, une séquence orthogonale et un bloc de ressources.

6. Procédé de transmission d'informations de commande configuré pour fonctionner dans un système 3GPP, comprenant :
la transmission (S101), par un dispositif réseau, de données de liaison descendante ;
la réception (S130), par le dispositif réseau, d'informations de commande de liaison montante sur une ressource de transmission, dans lequel la ressource de transmission est une des N premières ressources ou une des M secondes ressources, les N premières ressources correspondent à N statuts de réception de données de liaison descendante, les M secondes ressources sont utilisées pour transmettre une demande de planification, N est un entier positif supérieur à 1 et M est un entier positif ; et
la détermination (S140), par le dispositif réseau, d'un statut de réception des données de liaison descendante et d'un statut de transmission de demande de planification sur la base de la ressource de transmission et des informations de commande de liaison montante, dans lequel N est 2 ou 4, les deux statuts de réception des données de liaison descendante comprennent un accusé de réception positif, ACK, et un accusé de réception négatif, NACK, ou les quatre statuts de réception des données de liaison descendante comprennent (ACK, ACK), (NACK, NACK), (ACK, NACK) et (NACK, ACK), et la réception (S130), par un dispositif réseau, d'informations de commande de liaison montante sur une ressource de transmission comprend :
le fait de déterminer, par le biais du dispositif réseau, que la ressource de transmission est une des M secondes ressources, dans lequel M>1 ou le fait de déterminer, par le biais du dispositif réseau, que la ressource de transmission est une des N premières ressources ;
la réception, par le dispositif réseau, des informations de commande de liaison montante sur l'une des M secondes ressources ou sur l'une des N premières ressources, dans lequel
la détermination (S140), par le dispositif réseau, d'un statut de réception de données de liaison descendante et d'un statut de transmission de demande de planification sur la base de la ressource de transmission et des informations de commande de liaison montante comprend :
le fait de déterminer, par le biais du dispositif réseau sur la base de l'une des M secondes ressources et des informations de commande de liaison montante, que le statut de réception des données de liaison descendante est un des N statuts de réception de données et le statut de transmission de demande de planification est une transmission de demande de planification positive ou le fait de déterminer, par le biais du dispositif réseau sur la base de l'une des N premières ressources et des informations de commande de liaison montante, que le statut de réception des données de liaison descendante est un des N statuts de réception de données et le statut de transmission de demande de planification est une transmission de demande de planification négative, dans lequel chacun des statuts de réception des données de liaison descendante a une ressource correspondante différente dans les N premières ressources.

7. Procédé selon la revendication 6, dans lequel M est 2.

8. Procédé selon l'une quelconque des revendications 6 ou 7, dans lequel N est 2, M est 2, les deux secondes ressources comprennent une première seconde ressource et une seconde seconde ressource, et la ressource de transmission est la première seconde ressource et la seconde seconde ressource ; et
la détermination (S140), par le dispositif réseau, d'un statut de réception de données de liaison descendante et d'un statut de transmission de demande de planification sur la base de la ressource de transmission et des informations de commande de liaison montante comprend :
le fait de déterminer, par le biais du dispositif réseau sur la base de la première seconde ressource, que l'état de réception des données de liaison descendante est l'ACK et l'état de transmission de demande de planification est la transmission de demande de planification positive ; ou
le fait de déterminer, par le biais du dispositif réseau sur la base de la seconde seconde ressource, que le statut de réception des données de liaison descendante est le NACK et le statut de transmission de demande de planification est la transmission de demande de planification positive.

9. Procédé selon l'une quelconque des revendications 6 à 8, dans lequel N est 2, M est 2, les deux premières ressources comprennent une première première ressource et une seconde première ressource ; et
la détermination (S140), par le dispositif réseau, d'un statut de réception de données de liaison descendante et d'un statut de transmission de demande de planification sur la base de la ressource de transmission et des informations de commande de liaison montante comprend :
le fait de déterminer, par le biais du dispositif réseau sur la base de la première première ressource, que le statut de réception des données de liaison descendante est l'ACK et le statut de transmission de demande de planification est la transmission de demande de planification négative ; ou
le fait de déterminer, par le biais du dispositif réseau sur la base de la seconde première ressource, que le statut de réception des données de liaison descendante est le NACK et le statut de transmission de demande de planification est la transmission de demande de planification négative.

10. Procédé selon l'une quelconque des revendications 6 à 9, dans lequel la première ressource est identifiée par au moins un parmi un décalage cyclique, une séquence orthogonale et un bloc de ressources ; et/ou
la seconde ressource est identifiée par au moins un parmi un décalage cyclique, une séquence orthogonale et un bloc de ressources.

11. Appareil étant configuré pour exécuter le procédé selon l'une quelconque des revendications 1 à 10.

12. Programme informatique comprenant des instructions qui, lorsque le programme est exécuté par un ordinateur, amènent l'ordinateur à mettre en œuvre le procédé selon l'une quelconque des revendications 1 à 5 ou le procédé selon l'une quelconque des revendications 6 à 10.
